# EUROPÄISCHE PATENTSCHRIFT

(11) **EP 2 254 937 B1**
(45) Veröffentlichungstag und Bekanntmachung des Hinweises auf die Patenterteilung: **05.09.2012**
(21) Anmeldenummer: 09720933.2
(22) Anmeldetag: 12.03.2009
(51) Int. Cl.: C08J 9/00, C08J 9/232, C08L 25/04, C08L 53/02, C08L 23/04

(54) **ELASTISCHER PARTIKELSCHAUMSTOFF AUF BASIS VON POLYOLEFIN/STYROL-POLYMER-MISCHUNGEN**
ELASTIC PARTICLE FOAM MADE FROM POLYOLEFIN/STYROL POLYMER MIXTURES
MOUSSE PARTICULAIRE ÉLASTIQUE À BASE DE MÉLANGES POLYMÈRE STYRÉNIQUE/POLYOLÉFINE

(30) Priorität: 13.03.2008 EP 08152693; 30.12.2008 EP 08173084; 30.12.2008 EP 08173086; 30.12.2008 EP 08173087; 05.03.2009 EP 09154432
(43) Veröffentlichungstag der Anmeldung: 01.12.2010
(73) Patentinhaber: BASF SE, 67056 Ludwigshafen (DE)
(72) Erfinder: SCHIPS, Carsten, 67342 Speyer (DE); HAHN, Klaus, 67281 Kirchheim (DE); GRÄSSEL, Georg, 67063 Ludwigshafen (DE); LONGO-SCHEDEL, Daniela, 53757 Sankt Augustin (DE); ASSMANN, Jens, 68165 Mannheim (DE); GIETL, Andreas, 68165 Mannheim (DE); KNOLL, Konrad, 68199 Mannheim (DE); LAMBERT, Jürgen, 67466 Lambrecht (DE); JANSSENS, Geert, 67159 Friedelsheim (DE); RUCKDÄSCHEL, Holger, 67487 St Martin (DE); HOFMANN, Maximilian, 68167 Mannheim (DE); ZYLLA, Christof, 67117 Limburgerhof (DE)
(86) Internationale Anmeldenummer: PCT/EP2009/052920
(87) Internationale Veröffentlichungsnummer: WO 2009/112549

(56) Entgegenhaltungen:
- EP-A- 0 682 079
- FR-A- 2 264 840
- US-A1- 2005 124 709
- DATABASE WPI Week 200420 Thomson Scientific, London, GB; AN 2004-205292 XP002530101 & JP 2001 310968 A (ASAHI KASEI KOGYO KK) 6. November 2001 (2001-11-06)
- DATABASE WPI Week 200732 Thomson Scientific, London, GB; AN 2007-337472 XP002530102 & JP 2007 084744 A (SEKISUI PLASTICS CO LTD) 5. April 2007 (2007-04-05)

## Beschreibung

Die Erfindung betrifft expandierbare, thermoplastische Polymerpartikel, enthaltend
- A): 45 bis 97,8 Gewichtsprozent eines Styrolpolymeren,
- B1): 1 bis 45 Gewichtsprozent eines Polyolefins mit einem Schmelzpunkt im Bereich von 105 bis 140°C,
- B2): 0 bis 25 Gewichtsprozent eines Polyolefins mit einem Schmelzpunkt unter 105°C,
- C1): 0,1 bis 25 Gewichtsprozent eines Styrol-Butadien-Blockcopolymeren,
- C2): 0,1 bis 10 Gewichtsprozent eines Styrol-Ethylen-Butylen-Blockcopofymeren,
- D): 1 bis 15 Gewichtsprozent eines Treibmittels,
- E): 0 bis 5 Gewichtsprozent eines Nukleierungsmittels,
wobei die Summe aus A) bis E) 100 Gew.-% ergibt, sowie Verfahren zu ihrer Herstellung und Verwendung zur Herstellung von elastischen Partikelschaumstoffformkörpern.

Polystyrolschaumstoffe sind harte Schaumstoffe. Ihre geringe Elastizität ist für viele Anwendungen, beispielsweise auf dem Verpackungsgebiet, nachteilig, da der Schutz des verpackten Gutes gegen Schlag- und Stoßbeanspruchung nur unzureichend möglich ist und die als Verpackungsmittel verwendeten Schaumstoffformteile bereits bei geringer Deformation brechen, wobei die Schutzwirkung des Schaumstoffs bei einer nochmaligen Belastung verloren geht. Es gab daher in der Vergangenheit bereits Versuche, die Elastizität von Polystyrolschaumstoffen zu erhöhen.

Expandierbare Polymermischungen aus Styrolpolymeren, Polyolefinen und gegebenenfalls Lösungsvermittlern, wie hydrierte Styrol-Butadien-Blockcopolymeren, sind beispielsweise aus DE 24 13 375, DE 24 13 408, DE 38 14 783, EP-A 0 682 079 oder JP 2007-084744 bekannt. Die daraus erhältlichen Schaumstoffe solien gegenüber Schaumstoffen aus Styrolpolymeren bessere mechanischen Eigenschaften, insbesondere eine bessere Elastizität und eine geringere Sprödigkeit bei tiefen Temperaturen, sowie eine Unempfindlichkeit gegenüber Lösungsmitteln, wie Essigester und Toluol, aufweisen. Das Treibmittelhaltevermögen und die Verschäumbarkeit der expandierbaren Polymermischungen zu niedrigen Dichten sind für die Verarbeitung jedoch nicht ausreichend.

Die WO 2005/056652 beschreibt Partikelschaumstoffformteile mit einer Dichte im Bereich von 10 bis 100 g/l, die durch Verschweißen von vorgeschäumten Schaumpartikeln aus expandierbaren, thermoplastischen Polymergranulaten erhältlich sind. Die Polymer Granulate enthalten Mischungen aus Styrolpolymeren und anderen thermoplastischen Polymeren und können durch Schmelzeimprägnierung und anschließender Druckunterwassergranulierung erhalten werden.

Des Weiteren sind elastische Partikelschaumstoffe aus expandierbaren Interpolymerpartikeln bekannt (z. B. US 2004/0152795 A1). Die Interpolymeren sind durch Polymerisation von Styrol in Gegenwart von Polyolefinen in wässriger Suspension erhältlich und bilden ein Interpenetrierendes Netzwerk aus Styropolymeren und Olefinpolymeren. Aus den expandierbaren Polymerpartikeln diffundiert das Treibmittel jedoch schnell heraus, so dass sie bei tiefen Temperaturen gelagert werden müssen und nur eine kurze Zeit eine ausreichende Verschäumbarkeit aufweisen.

WO 2008/050909 beschreibt elastische Partikelschaumstoffe aus expandierten Interpolymerpartikeln mit einer Kern-Schale-Struktur, wobei der Kern aus einem Polystyrol-Polyolefin-Interpolymer und die Schale aus einem Polyolefin besteht. Diese Partikelschaumstoffe weisen im Vergleich zum EPS eine verbesserte Elastizität und Rissbeständigkeit auf und werden in erster Linie als Transportverpackung oder als Energieabsorber in Automobilanwendungen eingesetzt.

Die WO 2005/092959 beschreibt nanoporöse Polymerschaumstoffe, die aus treibmittelhaltigen, mehrphasigen Polymermischungen mit Domänen im Bereich von 5 bis 200 nm erhältlich sind. Bevorzugt bestehen die Domänen aus einem durch Emulsionspolymerisation erhältlichen Kern-Schale-Teilchen, in denen die Löslichkeit des Treibmittels mindestens doppelt so hoch ist, als in den angrenzenden Phasen.

Eine neue Klasse von thermoplastischen Partikelschaumstoffen mit Zellen einer mittleren Zellgröße im Bereich von 20 bis 500 µm, in denen die Zellmembranen eine nanozelluläre oder faserförmige Struktur mit Poren- bzw. Faserdurchmessern unter 1500 nm aufweisen, wurde in WO 2008/125250 beschrieben.

Die bekannten rissbeständigen Schaumstoffe, beispielsweise aus expandierten Polyolefinen, expandierten Interpolymeren oder expandierbaren Interpolymeren, sind in der Regel nicht oder nur schlecht mit vorgeschäumte, expandierbaren Polsystyrol (EPS) - Partikeln kompatibel. Häufig ist bei der Verarbeitung zu Formteilen, wie Schaumstoffblöcken, eine schlechte Verschweißung der unterschiedlichen Schaustoffpartikel zu beobachten.

Aufgabe der vorliegenden Erfindung war es, expandierbare, thermoplastische Polymerpartikel mit geringem Treibmittelverlust und hohem Expansionsvermögen bereitzustellen, die zu Partikelschaumstoffen mit hoher Steifigkeit und gleichzeitig guter Elastizität verarbeitbar sind, sowie ein Verfahren zu deren Herstellung.

Des Weiteren sollten die expandierbaren, thermoplastischen Polymerpartikel auch mit herkömmlichem expandierbarem Polystyrol (EPS) verträglich sein und zu Partikelschaumstoffen verarbeitbar sein, welche eine hohe Druck- und Biegefestigkeit sowie Energieabsorption und gleichzeitig eine deutlich verbesserte Elastizität, Rissbeständigkeit und Biegearbeit aufweisen.

Demgemäß wurden die oben beschriebenen, expandierbaren thermoplastischen Polymerpartikel gefunden.

Gegenstand der Erfindung sind auch die durch Vorschäumen der expandierbaren, thermoplastischen Polymerpartikel erhältlichen Schaumstoffpartikel P1 und die durch anschließendes Versintern mit Heißluft oder Wasserdampf erhältlichen Partikelschaumsstoffe.

Bevorzugt enthalten die expandierbaren, thermoplastischen Polymerpartikel
- A): 55 bis 89,7 Gewichtsprozent, insbesondere 55 bis 78,1 Gewichtsprozent eines Styrolpolymeren,
- B1): 4 bis 25 Gewichtsprozent, insbesondere 7 bis 15 Gewichtsprozent eines Polyolefins mit einem Schmelzpunkt im Bereich von 105 bis 140°C,
- B2): 1 bis 15 Gewichtsprozent, 5 bis 10 Gewichtsprozent eines Polyolefins mit einem Schmelzpunkt unter 105°C,
- C1): 1 bis 15 Gewichtsprozent, 6 bis 9,9 Gewichtsprozent eines Styrol-Butadien-Blockcopolymeren,
- C2): 1 bis 9,9 Gewichtsprozent, 0,8 bis 5 Gewichtsprozent eines Styrol-Ethylen-Butylen-Blockcopolymeren,
- D): 3 bis 10 Gewichtsprozent eines Treibmittels,
- E): 0.3 bis 3 Gewichtsprozent, insbesondere 0,5 bis 2 Gewichtsprozent eines Nukleierungsmittels,
wobei die Summe aus A) bis E) 100 Gew.-% ergibt.

Besonders bevorzugt bestehen die expandierbaren, thermoplastischen Polymerpartikel aus den Komponenten A) bis E). In den daraus durch Vorschäumen erhältlichen Schaumstoffpartikeln ist das Treibmittel (Komponente D) beim Vorschäumen im Wesentlichen entwichen.

### Komponente A

Die expandierbaren thermoplastischen Polymerpartikel enthalten 45 bis 97,8 Gew.-%, besonders bevorzugt 55 bis 78,1 Gew.-% eines Styrolpolymeren A), wie Standard (GPPS)- oder Schlagzähpolystyrol (HIPS) oder Styrol-Acrylnitril-Copolymere (SAN) oder Acrylnitril-Butadien-Styrol-Copolymere (ABS) oder Mischungen davon. Die zur Herstellung der Schaumstoffpartikel P1 eingesetzten expandierbaren, thermoplastischen Polymerpartikel enthalten als Styrolpolymer A) bevorzugt Standard-Polystyrol (GPPS). Besonders bevorzugt werden Standard-Polystyroltypen mit gewichtsmittleren Molekulargewichten im Bereich von 120.000 bis 300.000 g/mol, insbesondere 190.000 bis 280.000 g/mol, ermittelt mit Gelpermeationschromatographie; und einer Schmelzevolumenrate MVR (200°C/5 kg) nach ISO 113 im Bereich von 1 bis 10 cm³/10 min, beispielsweise PS 158 K, 168 N oder 148 G der BASF SE. Zur Verbesserung der Verschweißung der Schaumstoffpartikel bei der Verarbeitung zum Formteil können leichtfließende Typen, beispielsweise Empera® 156L (Innovene) zugesetzt werden

### Komponenten B

Als Komponenten B) enthalten die expandierbaren thermoplastischen Polymerpartikel Polyolefine B1) mit einem Schmelzpunkt im Bereich von 105 bis 140°C und Polyolefine B2) mit einem Schmelzpunkt unter 105°C. Der Schmelzpunkt ist der mittels DSC (Dynamical Scanning Calorimetrie) bei einer Aufheizrate von 10°C/Minute ermittelte Schmelzpeak.

Die expandierbaren, thermoplastischen Polymerpartikel enthalten 1 bis 45 Gewichtsprozent, bevorzugt 4 bis 35 Gew.-%, besonders bevorzugt 7 bis 15 Gewichtsprozent eines Polyolefins B1). Als Polyolefin B1) wird bevorzugt ein. Homo- oder Copolymerer von Ethylen und/oder Propylen mit einer Dichte im Bereich von 0,91 bis 0,98 g/L (bestimmt nach ASTM D792), insbesondere Polyethylen eingesetzt. Als Polypropylene kommen insbesondere Spritzgusstypen in Betracht. Als Polyethylene kommen kommerziell erhältliche Homopolymere aus Ethylen, wie PE-LD (Spritzgusstypen), -LLD, - HD, oder Copolymere aus Ethylen und Propylen (z. B Moplen® RP220 und Moplen® RP320 der Basell oder Versify®-Typen der Dow), Ethylen und Vinylacetat (EVA), Ethylenacrylate (EA) oder Ethylen-Butylen-Acrylate (EBA) in Frage. Der Schmelzevolumenindex MVI (190°C/2,16 kg) der Polyethylene liegt üblicherweise im Bereich von 0,5 bis 40 g/10 min, die Dichte im Bereich von 0,91 bis 0,95 g/cm³. Außerdem können Abmischungen mit Polyisobuten (PIB)(z. B. Oppanol® B150 der BASF SE) eingesetzt werden. Besonders bevorzugt wird LLDPE mit einem Schmelzpunkt im Bereich von 110 bis 125°C und einer Dichte im Bereich von 0,92 bis 0,94 g/L eingesetzt.

Als Komponente B1) eigen sich auch Olefinblockcopolymere, welche sich aus einem Polyolefinblock PB1 (Hartblock) und einem Polyolefinblock PB2 (Weichblock) zusammensetzen, wie sie beispielsweise in WO 2006/099631 beschrieben sind. Der Polyolefinblock PB1 besteht bevorzugt aus 95 bis 100 Gew.-% Ethylen. Der PB2-Block besteht bevorzugt aus Ethylen und α-Olefin, wobei als α-Olefine Styrol, Propylen, 1-Buten, 1-Hexen, 1-Octen, 4-Methyl-1-Penten, Norbornene, 1-Decen, 1,5-Hexadien oder Mischungen davon in Betracht kommen. Bevorzugt wird als PB2-Block ein Ethylen-α-Olefin-Copolymerblock mit 5 bis 60 Gew.-% -α-Olefin, insbesondere ein Ethylen-Octen-Copolymerblock. Bevorzugt sind Multiblockcopolymere der Formel (PB1-PB2)n, wobei n für eine ganze Zahl zwischen 1 bis 100 steht. Die Blöcke PB1 und PB2 bilden im wesentlich eine lineare Kette und sind bevorzugt alternierend oder statistisch verteilt. Der Anteil der PB2-Blöcke beträgt bevorzugt 40 bis 60 Gew.-%, bezogen auf das Olefinblockcopolymer. Besonders bevorzugt sind Olefinblockcopolymer mit alternierenden, harten PB1-Blöcken und weichen, elastomeren PB2-Blöcken, die im Handel unter der Bezeichnung INFUSE® erhältlich sind.

Mit geringerem Anteil an Polyolefin B1) nimmt das Treibmittelhaltevermögen deutlich zu. Damit werden die Lagerfähigkeit und die Verarbeitbarkeit der expandierbaren, thermoplastischen Polymerpartikel deutlich verbessert. Im Bereich von 4 bis 20 Gew.-% Polyolefin erhält man expandierbare thermoplastische Polymerpartikel mit langer Lagerfähigkeit, ohne dass sich die elastischen Eigenschaften des daraus hergestellten Partikelschaumstoffs verschlechtern. Dies zeigt sich beispielsweise in einem geringern Entformungsrest εᵣₑₛₜ im Bereich von 25 bis 35 %.

Als Polyolefin B2) enthalten die expandierbaren, thermoplastischen Polymerpartikel enthalten 0 bis 25 Gewichtsprozent, bevorzugt 1 bis 15 Gew.-%, besonders bevorzugt 5 bis 10 Gewichtsprozent eines Polyolefins B2) mit einem Schmelzpunkt unter 105°C. Das Polyolefin B2) weist vorzugsweise eine Dichte im Bereich von 0,86 bis 0,90 g/L (bestimmt nach ASTM D792) auf. Hierfür eignen sich insbesondere thermoplastische Elastomere auf Basis von Olefinen (TPO). Besonders bevorzugt werden Ethylen-Octen-Copolymere, die beispielsweise im Handel unter der Bezeichnung Engage® 8411 von der Firma Dow erhältlich sind. Expandierbare, thermoplastische Polymerpartikel, die die Komponente B2) enthalten, zeigen nach der Verarbeitung zu Schaumstoffformteilen eine deutliche Verbesserung in der Biegearbeit und Reißfestigkeit.

### Komponenten C

Es ist aus dem Bereich der mehrphasigen Polymersysteme bekannt, dass die meisten Polymere nicht oder nur geringfügig miteinander mischbar sind (Flory), so dass es je nach Temperatur, Druck und chemischer Zusammensetzung zur Entmischung in jeweilige Phasen kommt. Werden unverträgliche Polymere kovalent miteinander verknüpft, so findet die Entmischung nicht auf makroskopischer, sondern lediglich auf mikroskopischer Ebene statt, d.h. auf der Längenskala der einzelnen Polymerkette. In diesem Fall spricht man daher von Mikrophasenseparation. Daraus resultieren eine Vielzahl von mesoskopischen Strukturen, z.B. lamellare, hexagonale, kubische und bikontinuierliche Morphologien, die eine starke Verwandtschaft mit lyotropen Phasen aufweisen.

Zur gezielten Einstellung der gewünschten Morphologie werden Verträglichkeitsvermittler (Komponenten C) eingesetzt. Eine Verbesserung der Verträglichkeit wird erfindungsgemäß durch die Verwendung einer Mischung von Styrol-Butadien- oder Styrol-Isopren-Blockcopolymeren als Komponente C1) und Styrol-Etylen-Butylen-Blockcopolymeren (SEBS) als Komponente C2) erreicht.

Die Verträglichkeitsvermittler führen zu einer verbesserten Haftung zwischen Polyolefinreichen und Styrolpolymerreichen Phasen und verbessern schon in geringen Mengen die Elastizität des Schaumstoffs deutlich gegenüber herkömmlichen EPS-Schaumstoffen. Untersuchungen zur Domänengröße der Polyolefinreichen Phase zeigten, dass der Verträglichkeitsvermittler durch Reduktion der Grenzflächenspannung kleine Tröpfchen stabilisiert.

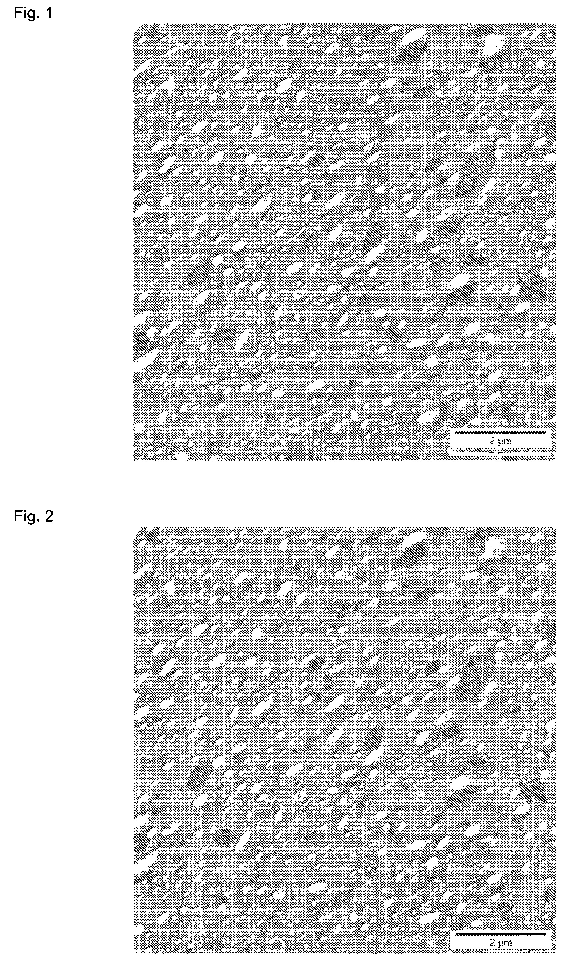

Figur 1 zeigt eine elektronenmikroskopische Aufnahme eines Schnittes durch ein treibmittelhaltiges, expandierbares Polystyrol/Polyethylen mit dispersen Polyethylendomänen in der Polystyrolmatrix.

Besonders bevorzugt bestehen die expandierbaren, thermoplastischen Polymerpartikel aus einer mehrphasigen treibmittelhaltigen Polymermischung mit mindestens einer kontinuierlichen Phase und mindestens zwei in der kontinuierlichen Phase verteilten dispersen Phasen K1 und K2, wobei
- a): die kontinuierliche Phase im Wesentlichen aus der Komponenten A,
- b): die erste disperse Phase K1 im Wesentlichen aus den Komponenten B1 und B2 und
- c): die zweite disperse Phase K2 im Wesentlichen aus der Komponente C1 bestehen.

Die Komponenten C2) bildet bevorzugt eine Phasengrenzfläche zwischen der dispersen Phase K1 und der kontinuierlichen Phase.

Durch diese zusätzliche disperse Phase ist es möglich, bei einem höheren Weichphasenanteil die Domänengröße der dispersen Phase < 2 µm zu halten. Dies führt bei gleicher Expandierbarkeit zu einer höheren Biegearbeit im Partikelschaumstoff.

Bevorzugt liegt in den expandierbaren, thermoplastischen Polymerpartikeln die Summe der Komponenten C1) und C2) im Bereich von 3,5 bis 30 Gewichtsprozent, besonders bevorzugt im Bereich von 6,8 bis 18 Gewichtsprozent.

Bevorzugt liegt das Gewichtsverhältnis der Summe aus den Komponenten B1) und B2) zur Komponenten C2) in den expandierbaren, thermoplastischen Polymerpartikeln bevorzugt im Bereich von 5 bis 70.

Das Gewichtsverhältnis der Komponenten C1) zu C2) liegt in den expandierbaren, thermoplastischen Polymerpartikeln bevorzugt im Bereich von 2 bis 5.

Figur 2 zeigt eine elektronenmikroskopische Aufnahme eines Schnittes durch ein treibmittelhaltiges, expandierbares Polystyrol/Polyethylen mit einer dispersen Polyethylendomäne (helle Bereiche) und einer dispersen Styrol-Butadien-Blockcopolymer-Phase (dunkle Bereiche) in der Polystyrolmatrix.

Die expandierbaren, thermoplastischen Polymerpartikel enthalten als Komponente C1) 0,1 bis 25 Gewichtsprozent, bevorzugt 1 bis 15 Gewichtsprozent, insbesondere 6 bis 9,9 Gewichtsprozent eines Styrol-Butadien- oder Styrol-Isopren-Blockcopolymeren.

Hierfür eignen sich beispielsweise Styrol-Butadien- oder Styrol-Isopren-Blockcopolymere. Der Gesamtdiengehalt liegt bevorzugt im Bereich von 20 bis 60 Gew.-%, besonders bevorzugt im Bereich von 30 bis 50 Gew.-%, der Gesamtstyrolgehalt liegt entsprechend bevorzugt im Bereich von 40 bis 80 Gew.-%, besonders bevorzugt im Bereich von 50 bis 70 Gew.-%.

Geeignete Styrol-Butadien-Blockcopolymere, welche aus mindestens zwei Polystyrolblöcken S und mindestens einem Styrol-Butadien-Copolymer-Block S/B bestehen, sind beispielsweise sternförmig verzweigte Blockcopolymere, wie sie in EP-A 0654488 beschrieben sind.

Des Weiteren eignen sich Blockcopolymere mit mindestens zwei Hartblöcken S1 und S2 aus vinylaromatischen Monomeren mit mindestens einem dazwischen liegenden statistischen Weichblock B/S aus vinylaromatischen Monomeren und Dien, wobei der Anteil der Hartblöcke über 40 Gew.-%, bezogen auf das gesamte Blockcopolymer beträgt und der 1,2-Vinylgehalt im Weichblock B/S unter 20 % beträgt, wie sie in WO 00/58380 beschrieben sind.

Als Verträglichkeitsvermittler sind auch lineare Styrol-Butadien-Blockcopolymere der allgemeinen Struktur S-(S/B)-S mit ein oder mehreren, zwischen den beiden S-Blöcken liegenden, eine statische Styrol/Butadien-Verteilung aufweisenden Blöcken (S/B)_{random}. geeignet. Solche Blockcopolymeren sind durch anionische Polymerisation in einem unpolaren Lösungsmittel unter Zusatz eines polaren Cosolvens oder eines Kaliumsalzes erhältlich, wie beispielsweise in WO 95/35335 bzw. WO 97/40079 beschrieben.

Als Vinylgehalt wird der relative Anteil an 1,2-Verknüpfungen der Dieneinheiten, bezogen auf die Summe der 1,2-, 1,4-cis und 1,4-trans-Verknüpfungen verstanden. Der 1,2-Vinylgehalt im Styrol-Butadien-Copolymerblock (S/B) liegt bevorzugt unter 20 %, insbesondere im Bereich von 10 bis 18 %, besonders bevorzugt im Bereich von 12 bis 16 %.

Als Verträglichkeitsvermittler werden bevorzugt Styrol-Butadien-Styrol (SBS) Dreiblockcopolymere mit einem Butadiengehalt von 20 bis 60 Gew.-%, bevorzugt 30 bis 50 Gew.-%, welche teilweise hydriert oder nicht hydriert sein können, verwendet Diese sind beispielsweise unter der Bezeichnung Styroflex® 2G66, Styrolux® 3G55, Styroclear® GH62, Kraton® D 1101, Kraton® D 1155, Tuftec® H1043 oder Europren® SOL T6414 im Handel. Dabei handelt es sich um SBS-Blockcopolymerer mit scharfen Übergängen zwischen B- und S-Blöcken.

Als Komponente C1 eignen sich insbesondere auch Block- oder Pfropfcopolymere, welche
- a): mindestens einen Block S aus 95 bis 100 Gew.-% vinylaromatischen Monomeren und 0 bis 5 Gew.-% Dienen und
- b): mindestens einen Copolymerblock (S/B)_{A} aus 63 bis 80 Gew.-% vinylaromatischen Monomeren und 20 bis 37 Gew.-% Dienen mit einer Glasübergangstemperatur Tg_{A} im Bereich von 5 bis 30°C,
enthalten.

Als vinylaromatische Monomere kommen beispielsweise Styrol, alpha-Methylstyrol, kernalkylierte Styrole wie p-Methylstyrol oder Tertiärbutylstyrol, oder 1,1-Diphenylethylen oder Mischungen davon in Betracht. Bevorzugt wird Styrol eingesetzt.

Bevorzugte Diene sind Butadien, Isopren, 2,3-Dimethylbutadien, 1,3-Pentadien, 1,3-Hexadien oder Piperylen oder deren Mischungen. Besonders bevorzugt sind Butadien und Isopren.

Die gewichtsmittlere Molmasse M_{w} des Blockcopolymeren liegt bevorzugt im Bereich von 250.000 bis 350.000 g/mol.

Bevorzugt bestehen die Blöcke S aus Styroleinheiten. Bei den durch anionische Polymerisation hergestellten Polymeren erfolgt die Kontrolle der Molmasse über das Verhältnis von Monomer- zu Initiatormenge. Initiator kann aber auch mehrfach nach bereits erfolgter Monomerdosierung zugegeben werden, dann erhält man eine bi- oder multimodale Verteilung. Bei radikalisch hergestellten Polymeren wird das gewichtsmittlere Molekulargewicht M_{w} über die Polymerisationstemperatur und/oder den Zusatz von Reglern eingestellt.

Die Glasübergangstemperatur des Copolymerblocks (S/B)_{A} liegt bevorzugt im Bereich von 5 bis 20°C. Die Glasübergangstemperatur wird durch die Comonomer-Zusammensetzung und -Verteilung beeinflusst und kann durch Differential Scanning Calorimetrie (DSC) oder Differential Thermal Analysis (DTA) bestimmt oder gemäß der Fox-Gleichung berechnet werden. In der Regel wird die Glasübergangstemperatur mit DSC nach ISO 11357-2 bei einer Aufheizrate von 20K/min ermittelt.

Bevorzugt besteht der Copolymerblock (S/B)_{A} aus 65 bis 75 Gew.-% Styrol und 25 bis 35 Gew.-% Butadien.

Bevorzugt werden Block- oder Pfropfcopolymere, welche ein oder mehrere Copolymerblöcke (S/B)_{A} aus vinylaromatischen Monomeren und Dienen mit statistischer Verteilung enthalten. Diese können beispielsweise durch anionische Polymerisation mit Lithiumalkylen in Gegenwart von Randomizern wie Tetrahydrofuran oder Kaliumsalzen erhalten werden. Bevorzugt werden Kaliumsalze mit einem Verhältnis von anionischem Initiator zu Kaliumsalz im Bereich von 25:1 bis 60:1 verwendet. Besonders bevorzugt sind cyclohexanlösliche Alkoholate wie Kaliumtertiärbutylamylat, die in einem Lithium-Kalium-Verhältnis von bevorzugt 30:1 bis 40:1 eingesetzt werden. Dadurch kann gleichzeitig ein niedriger Anteil an 1,2-Verknüpfungen der Butadieneinheiten erreicht werden.

Bevorzugt liegt der Anteil der 1,2-Verknüpfungen der Butadieneinheiten im Bereich von 8 bis 15%, bezogen auf die Summe der 1,2-, 1,4-cis- und 1,4-trans-Verknüpfungen.

Die gewichtsmittlere Molmasse M_{w} des Copolymerblocks (S/B)_{A} liegt in der Regel im Bereich von 30.000 bis 200.000 g/mol, bevorzugt im Bereich von 50.000 bis 100.000 g/mol.

Statistische Copolymere (S/B)_{A} können aber auch durch radikalische Polymerisation hergestellt werden.

Die Blöcke (S/B)_{A} bilden in der Formmasse bei Zimmertemperatur (23°C) eine halbharte Phase aus, welche für die hohe Duktilität und Reißdehnungen, d.h. hohe Dehnung bei geringer Dehngeschwindigkeit, verantwortlich sind.

Die Block- oder Pfropfcopolymeren können zusätzlich
- c): mindestens einen Homopolydien (B)- oder Copolymerblock (S/B)_{B} aus 1 bis 60 Gew.-%, vorzugsweise 20 bis 60 Gew.-% vinylaromatischen Monomeren und 40 bis 99 Gew.-%, bevorzugt 40 bis 80 Gew.-% Dienen mit einer Glasübergangstemperatur Tg_{B} im Bereich von 0 bis -110°C, enthalten.

Die Glasübergangstemperatur des Copolymerblocks (S/B)_{B} liegt bevorzugt im Bereich von -60 bis -20°C. Die Glasübergangstemperatur wird durch die Comonomer-Zusammensetzung und -Verteilung beeinflusst und kann durch Differential Scanning Calorimetrie (DSC) oder Differential Thermal Analysis (DTA) bestimmt oder gemäß der Fox-Gleichung berechnet werden. In der Regel wird die Glasübergangstemperatur mit DSC nach ISO 11357-2 bei einer Aufheizrate von 20K/min ermittelt.

Bevorzugt besteht der Copolymerblock (S/B)_{B} aus 30 bis 50 Gew.-% Styrol und 50 bis 70 Gew.-% Butadien.

Bevorzugt werden Block- oder Pfropfcopolymere , welche ein oder mehrere Copolymerblöcke (S/B)_{B} aus vinylaromatischen Monomeren und Dienen mit statistischer Verteilung enthalten. Diese können beispielsweise durch anionische Polymerisation mit Lithiumalkylen in Gegenwart von Randomizern wie Tetrahydrofuran oder Kaliumsalzen erhalten werden. Bevorzugt werden Kaliumsalze mit einem Verhältnis von anionischem Initiator zu Kaliumsalz im Bereich von 25:1 bis 60:1 verwendet. Dadurch kann gleichzeitig ein niedriger Anteil an 1,2-Verknüpfungen der Butadieneinheiten erreicht werden.

Bevorzugt liegt der Anteil der 1,2-Verknüpfungen der Butadieneinheiten im Bereich von 8 bis 15%, bezogen auf die Summe der 1,2-, 1,4-cis- und 1,4-trans-Verknüpfungen.

Statistische Copolymere (S/B)_{B} können aber auch durch radikalische Polymerisation hergestellt werden.

Die eine Weichphase bildenden Blöcke B und/oder (S/B)_{B} können über ihre gesamte Länge einheitlich oder in unterschiedlich zusammengesetzte Abschnitte aufgeteilt sein. Bevorzugt sind Abschnitte mit Dien (B) und (S/B)_{B}, die in unterschiedlichen Abfolgen kombiniert werden können. Möglich sind Gradienten mit sind kontinuierlich änderndem Monomerverhältnis, wobei der Gradient mit reinem Dien oder einem hohen Dienanteil beginnen kann und der Styrolanteil bis 60 % ansteigen kann. Auch die Abfolge von zwei oder mehreren Gradientenabschnitten ist möglich. Gradienten können durch Un-ter- oder Überdosierung des Randomizers erzeugt werden. Bevorzugt ist die Einstellung eines Lithium-Kalium-Verhältnisses von größer als 40:1 oder bei Verwendung von Tetrahydrofuran (THF) als Randomizer eine THF-Menge von weniger als 0,25 Vol-% bezogen auf das Polymerisationslösungsmittel. Eine Alternative ist die bezogen auf die Polymerisationsgeschwindigkeit langsame, gleichzeitige Dosierung von Dien und Vinylaromat, wobei das Monomerverhältnis entsprechend dem angestrebten Zusammensetzungsprofil entlang des Weichblocks gesteuert wird.

Die gewichtsmittlere Molmasse M_{w} des Copolymerblocks (S/B)_{B} liegt in der Regel im Bereich von 50.000 bis 100.000 g/mol, bevorzugt im Bereich von 10.000 bis 70.000 g/mol.

Der Gewichtsanteil der Summe aller Blöcke S liegt im Bereich von 50 bis 70 Gew.-%, und der Gewichtsanteil der Summe aller Blöcke (S/B)_{A} und (S/B)_{B} im Bereich von 30 bis 50 Gew.-%, jeweils bezogen auf das Block- oder Pfropfcopolymer.

Bevorzugt sind Blöcke (S/B)_{A} und (S/B)_{B} durch einen Block S voneinander getrennt.

Das Gewichtsverhältnis der Copolymerblöcke (S/B)_{A} zu den Copolymerblöcken (S/B)_{B} liegt bevorzugt im Bereich von 80 : 20 bis 50 : 50.

Bevorzugt werden Blockcopolymere mit einem gewichtsmittleren Molekulargewicht M_{w} von mindestens 100.000 g/mol, enthaltend
- a): mindestens einen Block S aus 95 bis 100 Gew.% vinylaromatischen Monomeren und 0 bis 5 Gew.-% Dienen und
- b): mindestens einen Copolymerblock (S/B)_{A} aus 63 bis 80 Gew.-% vinylaromatischen Monomeren und 20 bis 37 Gew.-% Dienen mit einer Glasübergangstemperatur Tg_{A} im Bereich von 5 bis 30°C,
wobei der Gewichstanteil der Summe der Blöcke S im Bereich von 50 bis 70 Gew.-%, bezogen auf das Blockcopolymer liegt, eingesetzt.

Bevorzugt werden Blockcopolymere mit linearen Strukturen, insbesondere solche mit der Blockfolge
S₁-(S/B)_{A}-S₂ (Triblockcopolymere)
S₁-(S/B)_{A}-S₂-(S/B)_{B}-S₃ oder
S₁-(S/B)_{A}-S₂-(S/B)_{A}-S₃ (Pentablockcopolymere),
wobei S₁, S₂ und S₃ jeweils für einen Block S stehen.

Diese zeichnen sich durch einen hohem E-Modul von1500 bis 2000 MPa, eine hohe Streckspannung im Bereich von 35 bis 42 MPa) und einer Bruchdehnung von über 30% in Mischungen mit einem Polystyrolanteil von über 80 Gew.-%. Kommerzielle SBS-Blockcopolymere mit diesem Polystyrolanteil zeigen zum Vergleich eine Bruchdehnung von nur 3-30 %.

Bevorzugt werden Triblockcopolymere der Struktur S₁-(S/B)_{A}-S₂. welche einen Block (S/B)_{A} aus 70 bis 75 Gew.-% Styroleinheiten und 25 bis 30 Gew.-% Butadieneinheiten enthalten. Die Glasübergangstemperaturen können mit DSC bestimmt oder nach der Gordon-Taylor-Gleichung berechnet werden und liegen bei dieser Zusammensetzung im Bereich von 1 bis 10°C. Der Gewichtsanteil der Blöcke S₁ und S₂, bezogen auf das Triblockcopolymer beträgt bevorzugt jeweils 30% bis 35 Gew.-%. Das Gesamtmolekulargewicht liegt vorzugsweise im Bereich von 150.000 bis 350.000 g/mol, besonders bevorzugt im Bereich von 200.000 bis 300.000 g/mol.

Besonders bevorzugt werden Pentablockcopolymere der Struktur S₁-(S/B)_{A}-S₂-(S/B)_{A}-S₃, welche einen Block (S/B)_{A} aus 70 bis 75 Ges.-% Styroleinheiten und 25 bis 30 Gew.-% Butadieneinheiten enthalten. Die Glasübergangstemperaturen können mit DSC bestimmt oder nach der Gordon-Taylor-Gleichung berechnet werden und liegen bei dieser Zusammensetzung im Bereich von 1 bis 10°C. Der Gewichtsanteil der Summe der Blöcke S₁ und S₂, bezogen auf das Pentablockcopolymer, beträgt bevorzugt 50 bis 67 Gew.-%. Das Gesamtmolekulargewicht liegt vorzugsweise im Bereich von 260.000 bis 350.000 g/mol. Bedingt durch die molekulare Architektur können hier Bruchdehnungen von bis zu 300 % bei einem Styrolanteil von über 85 % erreicht werden.

Des Weiteren können die Blockcopolymeren A eine sternförmige Struktur aufweisen, welche die Blockfolge S₁-(S/B)_{A}-S₂-X-S₂-(S/B)_{A}-S₁ enthält wobei S₁ und S₂ jeweils für einen Block S und X für den Rest eines mehrfunktionellen Kopplungsmittels stehen. Als Kopplungsmittel geeignet ist z.B. epoxidiertes Pflanzenöl wie epoxidiertes Leinsamen- oder Sojabohnenöl. Man erhält in diesem Fall Sterne mit 3 bis 5 Ästen. Vorzugsweise bestehen die sternförmigen Blockcopolymeren im Mittel aus zwei S₁-(S/B)_{A}-S₂-Armen und zwei über den Rest des Kopplungsmittels verknüpften S₃-Blöcken und enthalten überwiegend die Struktur S₁-(S/B)_{A}-S₂-X(S₃)₂-S₂₋(S/B)_{A}-S₁,, wobei S₃ für einen weiteren S-Block steht. Das Molekulargewicht des Blockes S₃ sollte kleiner als das der Blöcke S₁ sein. Bevorzugt entspricht das Molekulargewicht des Blockes S₃ dem des Blockes S₂.

Solche sternförmigen Blockcopolymere können beispielsweise durch zweifache Initiierung erhalten werden, wobei eine Initiatormenge I₁ zusammen mit der für die Bildung der Blöcke S₁ benötigten vinylaromatischen Monomeren und eine Initiatormenge I₂ zusammen mit der für die Bildung der S2-und S₃-Blöcke benötigen vinylaromatischen Monomeren nach Beendigung der Polymerisation des (S/B)_{A}-Blockes zugegeben werden. Das molare Verhältnis I1/I2 beträgt bevorzugt 0,5:1 bis 2:1, besonders bevorzugt 1,2:1 bis 1,8:1. Die sternförmigen Blockcopolymere weisen gegenüber den linearen Blockcopolymeren in der Regel eine breitere Molmassenverteilung auf. Die führt bei konstanter Fließfähigkeit zu einer Verbesserten Transparenz

Block - oder Pfropfcopolymere, welche aus den Blöcken S, (S/B)_{A} und (S/B)_{B} aufgebaut sind, beispielsweise Pentablockcopolymere der Struktur S₁-(S/B)_{A}-S₂-(S/B)_{A}, bilden eine Co-kontinuierliche Morphologie aus. Hier sind drei verschiedene Phasen in einem Polymermolekül vereint. Die aus den (S/B)_{B}-Blöcken gebildete Weichphase vermittelt in der Formmasse die Schlagzähigkeit und eignet sich zum Abfangen von Rissbildungen (Crazes). Die aus den Blöcken (S/B)_{A} gebildete halbharte Phase ist für die hohe Duktilität und Reißdehnungen verantwortlich. Über den Anteil der aus den Blöcken S und gegebenenfalls zugemischtem Polystyrol gebildeten Hartphase kann der E-Modul und die Streckspannung eingestellt werden.

Als Komponente C2) enthalten die expandierbaren, thermoplastischen Polymerpartikel 0,1 bis 10 Gewichtsprozent, bevorzugt 1 bis 9,9 Gew.-%, insbesondere 0,8 bis 5 Gewichtsprozent eines Styrol-Etylen-Butylen-Blockcopolymeren (SEBS). Geeignete Styrol-Etylen-Butylen-Blockcopolymere (SEBS) sind beispielsweise solche, die durch Hydrierung der olefinischen Doppelbindungen der Blockcopolymeren C1) erhältlich sind. Geeignete Styrol-Ethylen-Butylen-Blockcopolymere sind beispielsweise die im Handel erhältlichen Kraton® G Typen, insbesondere Kraton® G 1650.

### Komponente D

Als Treibmittel (Komponente D) enthalten die expandierbaren, thermoplastischen Polymerpartikel 1 bis 15 Gewichtsprozent, bevorzugt 3 bis 10 Gewichtsprozent, bezogen auf die Summe aller Komponenten A) bis E), eines physikalischen Treibmittels. Die Treibmittel können bei Raumtemperatur (20 bis 30°C) und Normaldruck gasförmig oder flüssig sein. Sie sollten einen Siedepunkt unterhalb der Erweichungstemperatur der Polymermischung, üblicherweise im Bereich von -40 bis 80°C, bevorzugt im Bereich reich von -10 bis 40°C. Geeignete Treibmittel sind beispielsweise halogenierte oder halogenfreie, wie aliphatischen C₃ bis C₈-Kohlenwasserstoffen, Alkoholen, Ketonen oder Ethern. Als aliphatische Treibmittel eignen sich beispielsweise aliphatische C₃ bis C₈-Kohlenwasserstoffe, wie n-Propan, n-Butan, iso-Butan, n-Pentan, iso-Pentan, n-Hexan, Neopentan, cycloaliphatische Kohlenwasserstoffe, wie Cyclobutan und Ccylopentan, halogenierte Kohlenwasserstoffe, wie Methylchlorid, Ethylchlorid, Methylenchlorid, Trichlorofluormethan, Dichlorfluormethan, Dichlordifluormethan, Chlordifluormethan, Dichlortetrafluorethan und Mischungen davon. Bevorzugt werden die halogenfreien Treibmittel iso-Butan, n-Butan, iso-Pentan, n-Pentan, Neopentan, Cyclopentan und Mischungen davon.

Das Treibmittelhaltevermögen nach Lagerung kann verbessert und geringere minimale Schüttdichten erreicht werden, wenn das Treibmittel bevorzugt einen Anteil von 25 bis 100 Gewichtsprozent, besonders bevorzugt 35 bis 95 Gewichtsprozent, bezogen auf das Treibmittel, iso-Pentan oder Cyclopentan enthält. Bevorzugt enthalten die erfindungsgemäßen expandierbaren, thermoplastischen Polymerpartikel als Treibmittel eine Mischung aus C₃ bis C₈-Kohlenwasserstoffen mit einem Anteil von 25 bis 100 Gewichtsprozent, bezogen auf das Treibmittel, iso-Pentan oder Cyclopentan. Besonders bevorzugt werden Mischungen aus 30 bis 98 Gew.-%, insbesondere 35 bis 95 Gew.-% Iso-Pentan und 70 bis 2 Gew.-%, insbesondere 65 bis 5 Gew.-% n-Pentan eingesetzt.

Überraschenderweise wurde trotz des niedrigeren Siedepunkts von iso-Pentan (28°C) und des höheren Dampfdrucks (751 hPa) im Vergleich zu reinem n-Pentan (36°C; 562 hPa) in Treibmittelmischungen mit einem iso-Pentan-Gehalt von mindestens 30 Gew.-% ein deutlich besseres Treibmittelhaltevermögen und damit erhöhte Lagerstabilität kombiniert mit einer besseren Schäumbarkeit zu niedrigen Dichten gefunden.

Geeignete Cotreibmittel sind solche mit einer geringeren Selektivität der Löslichkeit für die Domänen bildenden Phase, beispielsweise Gase wie CO₂, N₂ oder Edelgase. Diese werden bevorzugt in Mengen von 0 bis 10 Gew.-%, bezogen auf die expandierbaren, thermoplastischen Polymerpartikel eingesetzt.

### Komponente E

Als Komponente E enthalten die expandierbaren, thermoplastischen Polymerpartikel 0 bis 5 Gewichtsprozent, bevorzugt 0,3 bis 3 Gewichtsprozent eines Keimbildner oder Nukleierungsmittel, beispielsweise Talkum.

Des Weiteren können der mehrphasigen Polymermischung Additive, Keimbildner, Weichmacher, halogenhaltige oder halogenfreie Flammschutzmittel, lösliche und unlösliche anorganische und/oder organische Farbstoffe und Pigmente, Füllstoffe oder Cotreibmittel in Mengen zugesetzt werden, die die Domänenbildung und daraus resultierende Schaumstoffstruktur nicht beeinträchtigen.

### Verfahren zur Herstellung

Die Polymermischung mit einer kontinuierlichen und mindestens einer dispersen Phase kann durch Mischen von zwei unverträglichen thermoplastischen Polymeren, beispielsweise in einem Extruder, hergestellt werden.

Die erfindungsgemäßen expandierbaren thermoplastischen Polymerpartikel können durch ein Verfahren erhalten werden, bei dem man
- a): eine Polymermischungen mit einer kontinuierlichen und mindestens einer dispersen Phase durch Mischen der Komponenten A) bis C) und gegebenenfalls E) herstellt,
- b): diese Mischungen mit einem Treibmittel D) imprägniert und ,
- c): zu expandierbaren, thermoplastischen Polymerpartikel durch Unterwassergranulierung bei einem Druck im Bereich von 0,15 bis 1 MPa (1,5 bis 10 bar) granuliert.

Der mittlere Durchmesser der dispersen Phase der in Stufe a) hergestellten Polymermischung liegt bevorzugt im Bereich von 1 bis 2000 nm, besonders bevorzugt im Bereich von 100 bis 1500 nm.

In einer weiteren Ausführungsform kann in Stufe b) die Polymermischung auch zuerst granuliert und die Granulate anschließend in einer Stufe c) in wässriger Phase unter Druck und erhöhter Temperatur mit einem Treibmittel D) zu expandierbaren thermoplastischen Polymerpartikel nachimprägniert werden. Diese können anschließend nach Abkühlen unter die Schmelzetemperatur der Polymermatrix isoliert oder als vorgeschäumten Schaumstoffpartikeln direkt durch Druckentspannung erhalten werden.

Besonders bevorzugt wird ein kontinuierliches Verfahren, bei dem die Stufe a) ein thermoplastisches, die kontinuierliche Phase bildenden Styrolpolymer A), beispielsweise Polystyrol, in einem Zweiwellen-Extruder aufgeschmolzen und zur Bildung der Polymermischung mit einem die disperse Phase bildenden Polyolefin B1 und B2) sowie den Verträglichkeitsvermittlern C1) und C2) und gegebenenfalls Nukleierungsmittel E) vermischt wird und anschließend die Polymerschmelze in Stufe b) durch eine oder mehrere statische und/oder dynamischen Mischelemente gefördert und mit dem Treibmittel D) imprägniert wird. Die treibmittelbeladene Schmelze kann anschließend durch eine entsprechende Düse zu Schaumstoffplatten, -strängen oder -Partikeln extrudiert und geschnitten werden.

Mittels Unterwassergranulierung (UWG) kann die aus der Düse austretende Schmelze auch direkt zu expandierbaren oder gezielt angeschäumten Polymerpartikeln geschnitten werden. Die Einstellung des geeigneten Gegendrucks und einer geeigneten Temperatur im Wasserbad des UWG ermöglicht somit eine gezielte Herstellung von Schaumstoffpartikeln zu ermöglichen.

Zur Herstellung der expandierbaren Polymerpartikel wird die Unterwassergranulierung in der Regel bei Drücken im Bereich von 0,15 bis 1 MPa (1,5 bis 10 bar) durchgeführt. Die Düsenplatte weist in der Regel mehrere Nester mit mehreren Löchern. Bei einem Lochdurchmesser im Bereich von 0,2 bis 1 mm erhält man expandierbare Polymerpartikel mit einem bevorzugten mittleren Partikeldurchmesser im Bereich von 0,5 bis 1,5 mm. Expandierbare Polymerpartikel mit enger Partikelgrößenverteilung und einem mittleren Partikeldurchmesser im Bereich von 0,6 bis 0,8 mm führen nach Vorschäumen zu einer besseren Ausfüllung des Formteilautomaten mit filigranere Formteilgestaltung. Des Weiteren wird dadurch eine bessere Formteiloberfläche erreicht mit weniger Zwickelvolumen.

Bevorzugt werden die erhaltenen runden oder ovalen Partikel auf einen Durchmesser im Bereich von 0,2 bis 10 mm aufgeschäumt. Ihre Schüttdichte liegt vorzugsweise im Bereich von 10 bis 100 g/l.

Eine bevorzugte Polymermischungen in Stufe a) wird durch Mischen von
- A): 45 bis 97,8 Gewichtsprozent, insbesondere 55 bis 78,1 Gew.-% Styrolpolymeren,
- B1): 1 bis 45 Gewichtsprozent, insbesondere 4 bis 25 Gew.-% eines Polyolefins mit einem Schmelzpunkt im Bereich von 105 bis 140°C,
- B2): 0 bis 25 Gewichtsprozent, insbesondere 5 bis 10 Gew.-% eines Polyolefins mit einem Schmelzpunkt unter 105°C,
- C1): 0,1 bis 25 Gewichtsprozent, insbesondere 6 bis 15 Gew.-% eines Styrol-Butadien- oder Styrol-Isopren-Blockcopolymeren,
- C2): 0,1 bis 10 Gewichtsprozent, insbesondere 0,8 bis 3 Gew.-% eines Styrol-Ethylen-Butylen-Blockcopolymeren,
- E): 0 bis 5 Gewichtsprozent, insbesondere 0,3 bis 2 Gew.-% eines Nukleierungsmittels,
erhalten und
in Stufe c) mit 1 bis 15 Gew.-% , insbesondere 3 bis 10 Gew.-% eines Treibmittels D) imprägniert, wobei die Summe aus A) bis E) 100 Gew.-% ergibt, und in Stufe c) granuliert.

Zur Verbesserung der Verarbeitbarkeit können die fertigen expandierbaren thermoplastischen Polymerpartikel durch Glycerinester, Antistatika oder Antiverklebungsmittel beschichtet werden.

Bevorzugt werden die erhaltenen runden oder ovalen Partikel auf einen Durchmesser im Bereich von 0,2 bis 10 mm aufgeschäumt. Ihre Schüttdichte liegt vorzugsweise im Bereich von 10 bis 100 g/l.

Die Verschweißung der vorgeschäumten Schaumstoffperlen zum Formteil und die daraus resultierenden mechanischen Eigenschaften werden insbesondere durch Beschichtung der expandierbaren thermoplastischen Polymerpartikel mit einem Glycerinstearat verbessert. Besonders bevorzugt wird eine Beschichtung aus 50 bis 100 Gew.-% Glycerintristearat (GTS), 0 bis 50 Gew.-% Glycerinmonostearat (GMS) und 0 bis 20 Gew.-% Kieselsäure verwendet.

Die erfindungsgemäßen expandierbaren, thermoplastischen Polymerpartikel P1 können mittels Heißluft oder Wasserdampf zu Schaumpartikeln mit einer Dichte im Bereich von 8 bis 200 kg/m³, bevorzugt im Bereich von 10 bis 80 kg/m³, insbesondere im Bereich von 10 bis 50 kg/m³ vorgeschäumt und anschließend in einer geschlossenen Form zu Schaumstoffformkörpem verschweißt werden. Hierbei wird der Verarbeitungsdruck so niedrig gewählt wird, dass Domänenstruktur in den Zellmembranen erhalten bleibt, zu Partikelschaumstoffformteilen verschweißt. Üblicherweise wird ein Überdruck im Bereich von 0,05 bis 0,15 MPa (0,5 bis 1,5 bar), insbesondere 0,7 bis 1,0 bar gewählt.

Die so erhältlichen thermoplastischen Partikelschaumstoffe P1 weisen bevorzugt Zellen einer mittleren Zellgröße im Bereich von 50 bis 250 µm und eine faserförmig verstreckte, disperse Phase in den Zellwänden der thermoplastischen Partikelschaumstoffe mit einem mittleren Durchmesser im Bereich von 10 bis 1000 nm, besonders bevorzugt im Bereich von 100 bis 750 nm auf.

### Schaumstoffpartikel P2

Als Schaumstoffpartikel P2 können von den erfindungsgemäßen Schaumstoffpartikel P1 verschiedene Schaumstoffpartikel, insbesondere aus Styrolpolymeren oder Polyolefinen, wie expandiertes Polypropylen (EPP) expandiertes Polyethylen (EPE) oder vorgeschäumtes, expandierbares Polystyrol (EPS) eingesetzt. Es können auch Kombinationen verschiedener Schaumstoffpartikel eingesetzt werden. Vorzugsweise handelt es sich um thermoplastische Materialien. Es können auch vernetzte Polymere, beispielsweise strahlenvernetzte Polyolefinschaumstoffpartikel verwendet werden.

Die Schaumstoffpartikel auf Basis von Styrolpolymeren können durch Vorschäumen von EPS mit Heißluft oder Wasserdampf in einem Vorschäumer auf die gewünschte Dichte erhalten werden. Durch ein- oder mehrmaliges Vorschäumen in einem Druckoder kontinuierlichen Vorschäumer können hierbei Endschüttdichten unter 10 g/l erhalten werden.

Zur Herstellung von Dämmstoffplatten mit hoher Wärmedämmfähigkeit verwendet man besonders bevorzugt vorgeschäumte, expandierbare Styrolpolymerisate, die athermane Festkörper, wie Ruß, Aluminium, Graphit oder Titandioxid, insbesondere Graphit einer mittleren Partikelgröße im Bereich von 1 bis 50 µm Partikeldurchmesser in Mengen von 0,1 bis 10 Gew.-%, insbesondere 2 bis 8 Gew.-%, bezogen auf EPS, enthalten und beispielsweise aus EP-B 981 574 und EP-B 981 575 bekannt sind.

Besonders Wärmeform- und Lösungsmittel -beständige Schaumstoffpartikel P2 erhält man aus expandierbaren Styrolpolymeren, beispielsweise α-Methylstyrol/Acrylnitril-Polymeren (AMSAN) wie α-Methylstyrol/Acrylnitril-Copolymere oder α-Methylstyrol/Styrol/Acrylnitril-Terpolymeren, deren Herstellung in WO 2009/000872 beschrieben ist. Desweiteren können Schaumstoffpartikel P2 auf Basis von Styrol-Olefin-Interpolymeren oder schlagzäh-modifizieren Styrolpolymeren, wie Schlagzähpolystyrol (HIPS) eingesetzt werden.

Bei dem Verfahren können auch zerkleinerte Schaumstoffpartikel aus recyclierten Schaumstoffformkörpern eingesetzt werden. Zur Herstellung der erfindungsgemäßen Partikelschaumstoffe können die zerkleinerten Schaumstoffrecyclate zu 100 % oder z.B. in Anteilen von 2 bis 90 Gew.-% insbesondere 5 bis 25 Gew.-%, bezogen auf die Schaumstoffpartikel P2, zusammen mit Neuware ohne wesentliche Beeinträchtigung der Festigkeit und der mechanischen Eigenschaften eingesetzt werden.

Die Schaumstoffpartikel P2 können ebenfalls Additive, Keimbildner, Weichmacher, halogenhaltige oder halogenfreie Flammschutzmittel, lösliche und unlösliche anorganische und/oder organische Farbstoffe und Pigmente oder Füllstoffe in üblichen Mengen enthalten.

### Herstellung von Partikelschaumstoffen

Die aus den erfindungsgemäßen thermoplastischen Polymerpartikeln erhältlichen Schaumstoffpartikel P1 zeigen eine überraschend gute Kompatibilität mit den Schaumstoffpartikeln P2 und können mit diesen daher verschweißt werden. Hierbei können auch vorgeschäumte Perlen verschiedener Dichte verwendet werden. Zur Herstellung der erfindungsgemäßen Partikelschaumstoffe werden bevorzugt Schaumstoffpartikel P1 und P2, die jeweils eine Dichte im Bereich von 5 bis 50 kg/m³ aufweisen, eingesetzt.

Nach einer Ausführungsform können die Schaumstoffpartikel P1 und P2 gemischt und in einer Form mit Heißluft oder Wasserdampf versintert werden.

Bevorzugt besteht die eingesetzte Mischung aus 10 bis 99 Gew.-%, besonders bevorzugt 15 bis 80 Gew.-% Schaumstoffpartikel P1 und 1 bis 90 Gew.-%, besonders bevorzugt 20 bis 85 Gew.-% Schaumstoffpartikel P2.

In einer weiteren Ausführungsform können die Schaumstoffpartikel P1 und P2 im Wesentlichen vermischungsfrei in eine Form gefüllt und mit Heißluft oder Wasserdampf versintert werden. Beispielsweise können die Schaumstoffpartikel P1 und P2 in ein oder mehreren Schichten in eine Form gefüllt und mit Heißluft oder Wasserdampf versintert werden.

Mit den erfindungsgemäßen Verfahrenalternativen können PartikelschaumstoffFormteile auf vielfältige Weise gestaltet und für Eigenschaften and die gewünschte Anwendung angepasst werden. Hierfür können die Mengenverhältnisse, die Dichte oder auch die Farbe der Schaumpartikel P1 und P2 in der Mischung variiert werden. Es resultieren Formteile mit einzigartigen Eigenschaftsprofilen.

Hierfür können beispielsweise Formteilmaschinen, die zur Herstellung von Formteilen mit unterschiedlicher Dichteverteilung geeignet sind, genutzt werden. Diese weisen in der Regel ein oder mehrere Schiebeelemente auf, die nach dem Befüllen der unterschiedlichen Schaumpartikel P1 und P2 oder während der Verschweißung herausgenommen werden können. Es ist aber auch möglich, die eine Sorte von Schaumstoffpartikel P1 oder P2 einfüllt und verschweißt und anschließend die andere Sorte der Schaumstoffpartikel nachfüllt und mit dem bereits vorliegenden Teilstück des Schaumstoffformteils verschweißt

Auf diese weise lassen sich auch Formteile, beispielsweise Paletten für den Stückgutversand herstellen, bei denen beispielsweise die Rippen oder Füße aus Schaumpartikeln P1 und der übrige Formkörper aus Schaumpartikeln P2 gefertigt sind.

Aufgrund Verträglichkeit der Schaumstoffpartikel P1 und P2 ist ein praktisch sortenreines Recycling ohne Zerlegung in die Einzelkomponenten möglich.

Verwendung der erfindungsgemäßen expandierbaren, thermoplastischen Polymerpartikel und Partikelschaumstoffe

Die aus den erfindungsgemäßen thermoplastischen Polymerpartikel erhältlichen Partikelschaumstoffe eignen sich aufgrund ihres zwischen Partikelschaumstoffen aus expandiertem Polypropylen (EPP) und expandierbarem Polystyrol (EPS) liegenden Eigenschaftsprofil prinzipiell für die üblichen Anwendungen beider Schaumstofftypen. Formkörper aus Schaumstoffpartikeln P2 eigenen sich zur Herstellung von Möbeln, von Verpackungsmaterialien, im Hausbau, im Trockenausbau oder im Innenausbau, beispielsweise als Laminat, Dämmstoff, Wand- oder Deckenelement, oder auch in Kraftfahrzeugen.

Auf Grund ihrer Elastizität finden sie insbesondere Verwendung für stoßdämpfende Verpackungen, als Kernmaterial für Kraftfahrzeugstoßstangen, zur Innenauskleidung von Kraftfahrzeugen, als Polstermaterial, sowie als Wärme- und Schalldämmmaterial. Die erfindungsgemäßen Partikelschaumstoffe eignen sich insbesondere zur Herstellung von Verpackungs- und Dämpfungsmaterialien oder Verpackungen mit verbesserter Bruch- und Rissbeständigkeit.

Die Partikelschaumstoffe eignen sich aufgrund ihrer Elastizität auch als Innenauskleidung von Schutzhelmen, wie Ski-, Motorrad- oder Fahrradhelme, um mechanischen Stöße abzufedern oder im Sport- und Freizeitbereich. Kernmaterialien für Surfbretter.

Aufgrund der hohen Wärme- und Schalldämmung sind aber auch Anwendungen im Baubereich möglich. Zur Fußbodendämmung werden üblicherweise Schaumstoffplatten verwendet, die direkt auf den Betonboden aufgelegt werden. Besonders wichtig wegen der Wärmedämmung nach unten ist dies bei Fußbodenheizungen. Hier werden in entsprechende Profilierungen der Schaumstoffplatten die Heißwasserrohre eingelegt. Über die Schaumstoffplatten wird ein Zementestrich aufgezogen, auf dem dann Holz- oder Teppichboden verlegt werden kann. Zusätzlich wirken die Schaumstoffplatten noch als Trittschalldämmung.

Die Formkörper eignen sich auch als Kernmaterial für Sandwichkonstruktionen im Schiff-, Luftfahrt-, Windenergieanlagen- und Fahrzeugbau. Sie können beispielweise zur Herstellung von Kraftfahrzeugteilen, wie Kofferraumböden, Hutablagen und Seitentürverkleidungen dienen.

Die Verbundformteile werden bevorzugt zur Herstellung von Möbeln, von Verpackungsmaterialien, im Hausbau, im Trockenausbau oder im Innenausbau, beispielsweise als Laminat, Dämmstoff, Wand- oder Deckenelement, eingesetzt. Die neuen Verbundformteile finden vorzugsweise im Kraftfahrzeugbau Verwendung, z.B. als Türverkleidungen, Armaturenbretter, Konsolen, Sonnenblenden, Stoßfänger, Spoiler und dergleichen.

Aufgrund der gegenüber Partikelschaumstoffen aus expandierbarem Polystyrol (EPS) höheren Elastizität und Rissbeständigkeit bei gleichzeitig hoher Drucksteifigkeit, eignen sich die Schaumstoffpartikel P2 insbesondere zur Herstellung von Paletten. Zur Verbesserung der Haltbarkeit der Paletten können diese gegebenenfalls mit Holz, Kunststoff oder Metall verklebt oder mit einer Kunststofffolie, beispielsweise aus Polyolefinen oder Styrol-Butadien-Blockcopolymeren allseitig ummantelt werden.

### Beispiele

### Einsatzstoffe:

### Komponente A:

Polystyrol mit einem Schmelzeviskositätsindex MVI (200°C/5kg) von 2,9 cm3/10 min (PS 158K der BASF SE, M_{w} = 280.000 g/mol, Viskositätszahl VN 98 ml/g)

### Komponente B:

- B1.1:: Polyethylen PE-LLD (LL1201 XV, Exxon Mobile, Dichte 0,925 g/L, MVI = 0,7 g/10 min, Schmelzpunkt 123°C)
- B2.1:: Polyethylen Ethylen-Octen-Copolymer (Engage® 8411 der Dow, Dichte 0,880 g/L, MVI = 18 g/10 min, Schmelzpunkt 72°C)
- B2.2:: Polyethylen Ethylen-Octen-Copolymer (Exact®, 210 der Fa. ExxonMobile, Dichte 0,902 g/L, MVI = 10 g/10 min, Schmelzpunkt 95°C)

### Komponente C:

- C1.1:: Styrolux® 3G55, Styrol-Butadien-Blockcopolymer der BASF SE,
- C1.2:: Styroflex® 2G66, thermoplastisch elastisches Styrol-Butadien-Blockcopolymer (S-TPE) der BASF SE,
- C1.3:: Styrol-Butadien-Blockcopolymer der Struktur S₁-(S/B)_{A}-S₂-(S/B)_{A}-S₁, (20-20-20-20-20 Gew.-%), gewichtsmittleres Molekulargewicht 300.000 g/mol
- C2.1:: Kraton G 1650, Styrol-Ethylen-Butylen-Blockcopolymer der Kraton Polymers LLC
- C2.2:: Kraton G 1652, Styrol-Ethylen-Butylen-Blockcopolymer der Kraton Polymers LLC

### Komponente D:

Treibmittelmischung aus iso-Pentan und n-Pentan, soweit nicht anders vermerkt wurde Pentan S (20 Gew.-% iso-Pentan, 80 Gew.-% n-Pentan) eingesetzt.

### Komponente E:

Talkum (HP 320, Omyacarb)

### Herstellung des Blockcopolymeren C1.3

Zur Herstellung des linearen Styrol-Butadien-Blockcopolymeren C1.3 wurden in einem doppelwandigen 10 Liter Edelstahl-Rührautoklaven mit einem Kreuzbalkenrührer 5385 ml Cyclohexan vorgelegt, bei 60°C mit 1,6 ml sec-Butyllithium (BuLi) bis zum Auftreten einer durch 1,1-Diphenylethylen als Indikator hervorgerufenen Gelbfärbung austitriert und anschließend mit einer 3,33 ml einer 1,4 M sec.-Butyl-Lithium-Lösung zur Initiierung und 0,55 ml einer 0,282 M Kalium-tert.-Amylat (KTA)-Lösung als Randomizer versetzt. Anschließend wurde die zur Herstellung des ersten S-Blockes benötigte Menge Styrol (280 g Styrol 1) zugegeben und auspolymerisiert. Die weiteren Blöcke wurden entsprechend der angegebenen Struktur und Zusammensetzung durch sequentielle Zugabe der entsprechenden Mengen Styrol bzw. Styrol und Butadien und jeweiligem vollständigem Umsatz angefügt. Zur Herstellung der Copolymerblöcke wurden Styrol und Butadien gleichzeitig in mehreren Portionen zugegeben und die Maximaltemperatur durch Gegenkühlen auf 77°C begrenzt. Für Blockcopolymer K1-3 wurden hierfür 84 g Butadien 1 und 196 g Styrol 2 für den Block (S/B)_{A}, 280 g Styrol 3 für den Block S2, 84 g Butadien B2 und 196 g Styrol 4 für den Block (S/B)_{A} und 280 g Styrol 5 für den Block S₁

Danach wurden die lebenden Polymerketten durch Zugabe von 0,83 ml Isopropanol terminiert, mit 1,0 % CO₂/0,5 % Wasser, bezogen auf Feststoff angesäuert und eine Stabilisatorlösung (0,2 % Sumilizer GS und 0,2 % Irganox 1010, jeweils bezogen auf Feststoff) zugegeben. Das Cyclohexan wurde im Vakuumtrockenschrank eingedampft.

Das gewichtsmittlere Molekulargewicht M_{w} für das Blockcopolymer C1.3 beträgt 300.000 g/mol.

### Messungen an den Schaumstoffformteilen

An den Formteilen wurden verschiedene mechanische Messungen durchgeführt um die Elastifizierung des Schaumstoffs nachzuweisen.

Der Verformungsrest εᵣₑₛₜ der Schaumstoffformteile wurde aus der Einfachhysterese bei 75% Stauchung (Vorschub 5mm/min) nach ISO 3386-1 bestimmt. Der Verformungsrest εᵣₑₛₜ ist der prozentuale Anteil nach 75% Stauchung, der zur Ursprungshöhe des gestauchten Körpers fehlt. Bei den erfindungsgemäßen Beispielen wird im Vergleich zum reinen EPS eine deutliche Elastifizierung beobachtet, die an dem sehr hohen Rückstellungsvermögen erkennbar ist.

Die Druckfestigkeit wurde bei 10 % Stauchung nach DIN-EN 826 und die Biegefestigkeit nach DIN-EN 12089 bestimmt. Die Biegearbeit wurde aus den Messwerten zur Biegefestigkeit ermittelt.

### Beispiele 1 bis 3

In einem Zweischneckenextruder der Firma Leitritz ZE 40 wurden die Komponenten A) bis C) bei 240 - 260°C / 140 bar aufgeschmolzen und mit Talkum als Nukleierungsmittel (Komponente E) versetzt (siehe Tabelle 1). Anschließend wurde in die Polymerschmelze Pentan S (20% iso-Pentan, 80 % n-Pentan) als Treibmittel (Komponente D) gedrückt und über zwei statische Mischer homogen in die Polymerschmelze eingearbeitet. Danach wurde über einen Kühler die Temperatur auf 180°-195°C reduziert. Nach weiterer Homogenisierung über zwei weitere statische Mischer, wurde die Polymerschmelze mit 50 kg/h durch eine auf 240 - 260°C temperierte Lochplatte bei 200 - 220 bar gedrückt (0,6 mm Lochdurchmesser mit 7 Nester x 7 Löcher oder 0,4 mm Lochdurchmesser mit 7 Nester x 10 Löcher). Der Polymerstrang wurde mittels Unterwassergranulierung abgeschlagen 1,1-1,0 Mpa (11-10 bar) Unterwasserdruck bei 40°C-50°C Wassertemperatur), so dass ein treibmittelbeladenes Minigranulat mit enger Teilchengrößenverteilung (d'= 1,1 mm bei 0,6 mm Lochdurchmesser und 0,8 mm bei 0,4 mm Lochdurchmesser) erhalten wurde.

Das treibmittelhaltige Granulat wurde in einem EPS-Vorschäumer zu Schaumperlen geringer Dichte (15-25 g/L vorgeschäumt) und in einem EPS-Formteilautomaten bei einem Überdruck von 0,07-0,11 MPa (0,7-1,1 bar) zu Formteilen verarbeitet.

In der transmissionselektronenmikroskopischen Aufnahme (TEM) ist die disperse Verteilung des Polyethylens (helle Bereiche) im treibmittelhaltigen Minigranulat zu erkennen (Figur 1), die später zur Elastifizierung im Schaum beitragen. Die PE-Domänen des treibmittelbeladenen Minigranulats liegen dabei in der Größenordnung von 200 bis 1500 nm.

Als Beschichtungskomponenten wurde 70 Gew.-% Gycerintristearat (GTS) und 30 Gew.-% Glycerinmonostearat (GMS) verwendet. Das Beschichtungsmittel hatte einen positiven Effekt auf die Verschweißung der vorgeschäumten Schaumstoffperlen zum Formteil. Die Biegefestigkeit konnte auf 250 bzw. 310 KPa, gegenüber 150 kPa der aus den unbeschichteten Granulaten erhaltenen Formteile, erhöht werden.

Die kleinen Partikelgrößen 0,8 mm zeigten eine Verbesserung bei der Verarbeitbarkeit zum Formteil bezüglich Entformzeiten und Füllverhalten des Werkzeugs. Zusätzlich wurde die Formteiloberfläche homogener als bei Partikeln mit 1,1 mm Durchmesser.

**Tabelle 1: Zusammensetzung der expandierbaren Polymerpartikel (EPS) in Gewichtsanteilen und Eigenschaften der Schaumstoffformteile**

| | Beispiel | 1 | 2 | 3 |
|---|---|---|---|---|
| Zusammensetzung der expandierbaren Partikel | | | | |
| | Komponente A) | 69,8 | 71,1 | 76,9 |
| | Komponente B1.1) | 17,8 | 9,4 | 7,5 |
| | Komponente B2.1) | - | 8,7 | 4,7 |
| | Komponente C1.1) | 1,6 | 1,6 | 1,6 |
| | Komponente C2.1) | 1,6 | 1,6 | 0,9 |
| | Komponente D) | 7,4 | 5,7 | 6,5 |
| | Komponente E) | 1,9 | 1,9 | 1,9 |

| Eigenschaften des Schaumstoffformteils | | | | |
|---|---|---|---|---|
| | Schaumstoffdichte [g/L] | 20,2 | 23,2 | 20,9 |
| | Minimale Dichte [g/L] | 18,0 | 19,8 | 17,0 |
| | Druckfestigkeit 10% [kPa] | 82 | 104 | 100 |
| | Biegefestigkeit [kPa] | 265 | 321 | 311 |
| | Biegearbeit [Nm] | 4,5 | 5,8 | 4,6 |
| | Entformungsrest [%] | 34 | 33 | 32 |

### Beispiele 4 bis 9

Analog dem Verfahren nach Beispiel 1 wurde ein treibmittelbeladenes Polymergranulat mit den in Tabelle 2 angegebenen Komponenten und Mengen hergestellt. Als Treibmittel wurde eine Mischung aus 95 Gew.-% iso-Pentan, 5 Gew.-% n-Pentan eingesetzt. Das treibmittelhaltige Granulat wies eine enge Teilchengrößenverteilung (d'= 1,2 mm bei 0,65 mm Lochdurchmesser) auf.

Das treibmittelhaltige Granulat wurde in einem EPS-Vorschäumer zu Schaumperlen geringer Dichte (15-25 g/L vorgeschäumt) und in einem EPS-Formteilautomaten bei einem Überdruck von 0,09-0,14 MPa (0,9 - 1,4 bar) zu Formteilen verarbeitet.

Als Beschichtungskomponenten wurde 70 Gew.-% Glycerintristearat (GTS) und 30 Gew.-% Glycerinmonostearat (GMS) verwendet. Das Beschichtungsmittel hatte einen positiven Effekt auf die Verschweißung der vorgeschäumten Schaumstoffperlen zum Formteil.

In der transmissionselektronenmikroskopischen Aufnahme (TEM) ist die disperse Verteilung des Polyethylens (Phase P1 helle Bereiche) und disperse Verteilung des Styrol-Butadien-Blockcopolymer (Phase P2, dunkle Bereiche) im treibmittelhaltigen Minigranulat zu erkennen (Figur 2), die später zur Elastifizierung im Schaum beitragen. Die PE-Domänen des treibmittelbeladenen Minigranulats liegen dabei in der Größenordnung von 200 bis 1000 nm, die Styrol-Butadien-Blockcopolymer-Domänen in der Größenordnung von 200 bis 1500 nm.

**Tabelle 2: Zusammensetzung der expandierbaren Polymerpartikel (EPS) in Gewichtsanteilen und Eigenschaften der Schaumstoffformteile**

| | Beispiel | 4 | 5 | 6 | 7 | 8 | 9 |
|---|---|---|---|---|---|---|---|
| Zusammensetzung der expandierbaren Partikel | | | | | | | |
| | Komponente A) | 73,0 | 67,6 | 65,1 | 69,8 | 67,6 | 69,8 |
| | Komponente B1.1) | 8,1 | 7,5 | 7,2 | 7,7 | 7,5 | 7,7 |
| | Komponente B2.2) | 5,0 | 4,7 | 8,1 | 8,7 | 4,7 | 8,7 |
| | Komponente C1.1 | | | | | 13,0 | 5,8 |
| | Komponente C1.2 | 6,0 | 13,0 | 12,6 | 5,8 | | |
| | Komponente C2.1 | | | | | 0,7 | 1,3 |
| | Komponente C2.2 | 0,8 | 0,7 | 0,7 | 1,3 | | |
| | Komponente D (95 % iso-Pentan, 5 % n-Pentan) | 6,5 | 6,1 | 5,8 | 6,3 | 6,1 | 6,3 |
| | Komponente E) | 0,5 | 0,5 | 0,4 | 0,5 | 0,5 | 0,5 |

| Eigenschaften des Schaumstoffformteils | | | | | | | |
|---|---|---|---|---|---|---|---|
| | Schaumstoffdichte [g/L] | 19,3 | 19,4 | 19,5 | 19,5 | 21,3 | 21,6 |
| | Druckfestigkeit 10 % [kPa] | 97 | 96 | 86 | 94 | 95 | 94 |
| | Biegefestigkeit [kPa] | 282 | 286 | 240 | 282 | 278 | 280 |
| | Biegearbeit [Nm] | 4,8 | 5,8 | 5,1 | 5,5 | 5,7 | 5,4 |

### Beispiele 10 bis 19

In einem Zweischneckenextruder der Firma Leitritz ZSK 18 wurden die Komponenten A, B und C bei 220-240°C / 130 bar aufgeschmolzen (siehe Tabelle 3). Anschließend wurde in die Polymerschmelze 7,5 Anteile Pentan S (20% iso-Pentan, 80 % n-Pentan) als Treibmittel (Komponente D) gedrückt und über zwei statische Mischer homogen in die Polymerschmelze eingearbeitet. Danach wurde über einen Kühler die Temperatur auf 180°-185°C reduziert. Zu dem treibmittelbeladenen Hauptschmelzestrom wurde über einen Seitenextruder 1 Anteil Talkum (Komponente E) in Form eines Batches als Nukleierungsmittel zudosiert. Nach Homogenisierung über zwei weitere statische Mischer, wurde die Schmelze auf 140°C gekühlt und durch eine beheizte Lochplatte extrudiert (4 Löcher mit 0,65 mm Bohrung und 280°C Lochplattentemperatur). Der Polymerstrang wurde mittels Unterwassergranulierung abgeschlagen 1,2 MPa (12 bar) Unterwasserdruck, 45°C Wassertemperatur), so dass ein treibmittelbeladenes Minigranulat mit enger Teilchengrößenverteilung (d'= 1,1 mm) erhalten wurde.

Das treibmittelhaltige Granulat wurde in einem EPS-Vorschäumer zu Schaumperlen geringer Dichte (15-25 g/L vorgeschäumt) und in einem EPS-Formteilautomaten bei einem Überdruck von 0,09 - 0,14 MPa (0,9 - 1,4 bar) zu Formteilen verarbeitet.

Als Beschichtungskomponenten wurde 70 Gew.% Glycerintristearat (GTS) und 30 Gew.-% Glycerinmonostearat (GMS) verwendet. Das Beschichtungsmittel hatte einen positiven Effekt auf die Verschweißung der vorgeschäumten Schaumstoffperlen zum Formteil.

**Tabelle 3: Zusammensetzung der expandierbaren Polymerpartikel in Gewichtsanteilen und Eigenschaften der Schaumstoffformteile**

| | Beispiele | 10 | 11 | 12 | 13 | 14 | 15 | 16 | 17 | 18 | 19 |
|---|---|---|---|---|---|---|---|---|---|---|---|
| Zusammensetzung | | | | | | | | | | | |
| | Komp. A GPPS Typ | 158K | 158K | 158K | 158K | 158K | 158K | 158K | 158K | 168N | 168N |
| | Komp. A [Gew.-%] | 84 | 78 | 73 | 65 | 61 | 73 | 61 | 50 | 73 | 61 |
| | Komp. B1.1 [Gew.-%] | 8 | 8 | 8 | 8 | 8 | 8 | 8 | 8 | 8 | 8 |
| | Komp. B2.1 [Gew.-%] | 5 | 5 | 5 | 5 | 5 | 5 | 5 | 5 | 5 | 5 |
| | Komp. C1.3 [Gew.-%] | | 6,25 | 11,50 | 18,75 | 22,75 | 6,25 | 12,5 | 18,75 | 11,5 | 12,5 |
| | Komp. C2.1 [Gew.-%] | | | | | | 5,25 | 10,5 | 15,75 | | 10,5 |
| | Komp. C1.1 [Gew.-%] | 1,75 | 1,75 | 1,75 | 1,75 | 1,75 | 1,75 | 1,75 | 1,75 | 1,75 | 1,75 |
| | Komp. D [Gew.-%] | 7,5 | 7,5 | 7,5 | 7,5 | 7,5 | 7,5 | 7,5 | 7,5 | 7,5 | 7,5 |
| | Komp. E [Gew.-%] | 1 | 1 | 1 | 1 | 1 | 1 | 1 | 1 | 1 | 1 |

| Schaumstoffeigenschaften | | | | | | | | | | | |
|---|---|---|---|---|---|---|---|---|---|---|---|
| | Schaumstoffdichte [g/L] | 22,0 | 21,8 | 22,6 | 23,5 | 26,6 | 22,8 | 22,5 | 33,0 | 23,8 | 25,5 |
| | Druckfestigkeit bei 10 % [kPa] | 103 | 103 | 100 | 110 | 106 | 112 | 109 | 116 | 130 | 116 |
| | Biegefestigkeit [kPa] | 301 | 287 | 293 | 308 | 313 | 299 | 301 | 330 | 322 | 330 |
| | Biegearbeit [Nm] | 4,6 | 5,1 | 5,5 | 6,0 | 6,7 | 5,6 | 5,8 | 7,4 | 6,0 | 7,4 |
| | Entformungsrest [%] | 32 | 30 | 33 | 31 | 32 | 28 | 28 | 32 | 29 | 32 |

### Beispiele 20

In einem Zweischneckenextruder der Firma Leitritz ZSK 18 wurden 76,5 Gew.% Polystyrol 158K, 7,6 Gew.% Polyethylen LLDPE 1201XV, 8,5 Gew.% Polyethylen EOC Exact® 210 und 1,2 Gew.% SEBS Kraton® G1650 bei 220-240°C / 180-190 bar aufgeschmolzen. Anschließend wurden in die Polymerschmelze 6,1 Gew.-% einer Mischung aus 5 Gew.-% n-Pentan : 95 Gew.-% iso-Pentan als Treibmittel (Komponente D) gedrückt und über zwei statische Mischer homogen in die Polymerschmelze eingearbeitet. Danach wurde über einen Kühler die Temperatur auf 180°-185°C reduziert. Zu dem treibmittelbeladenen Hauptschmelzestrom wurde über einen Seitenextruder 0,5 Gew.-% Talkum, in Form eines Batches als Nukleierungsmittel (Komponente E) zudosiert (siehe Tabelle 4a). Nach Homogenisierung über zwei weitere statische Mischer, wurde die Schmelze auf 155°C gekühlt und durch eine beheizte Lochplatte extrudiert (4 Löcher mit 0,65 mm Bohrung und 280°C Lochplattentemperatur). Der Polymerstrang wurde mittels Unterwassergranulierung abgeschlagen 1,2 MPa (12 bar) Unterwasserdruck, 45°C Wassertemperatur), so dass ein treibmittelbeladenes Minigranulat mit enger Teilchengrößenverteilung (d'= 1,25 mm) erhalten wurde.

### Beispiel 21 bis 35

Die Beispiele 21 bis 35 wurden analog Beispiel 20 mit den in den Tabellen 4a und 4b aufgeführten Mengen und unterschiedlichen Treibmittelzusammensetzungen durchgeführt.

Die Treibmittelhalteversuche wurden in einer zylindrischen Zinkbox mit PE-Inlayer durchgeführt, die einen Durchmesser von 23 cm und eine Höhe von 20 cm besaß. In den PE Beutel wurde das über Extrusion hergestellte treibmittelhaltige Minigranulat eingefüllt, so dass die Zinkbox bis zum Rand vollständig gefüllt war.

Die geschlossenen Gefäße wurden anschließend für 16 Wochen bei Raumtemperatur (20-22 °C) zwischengelagert und anschließend geöffnet um den Treibmittelgehalt des Minigranulats, die Schäumbarkeit zur minimalen Schaumdichte und den Treibmittelgehalt nach dem Vorschäumen des Minigranulats zur minimalen Schaumdichte zu bestimmen. Dabei wurde der Treibmittelgehalt des Minigranulats nach dem Ausheizen im Trockenschrank bei 120°C durch Zurückwiegen bis zur Massekonstanz bestimmt.

Die Schäumbarkeit wurde in einem Rauscherkasten durch Bedampfung mit drucklosem gesättigtem Wasserdampf untersucht und dazu die minimal gefundene Schüttdichte mit der zugehörigen Schäumzeit bestimmt. Anschließend wurde der Resttreibmittelgehalt in den vorgeschäumten Perlen mittels GC-Analyse gemessen (interner Standard n-Hexan / lösen in einem Gemisch aus 40 Anteilen Toluol : 60 Anteilen Trichlorbenzol).

Um die Zeit der Lagerversuche zu verkürzen und die Unterscheide deutlicher zu machen, wurden die bereits geöffneten Behälter bei Raumtemperatur (20-22°C) in einem Abzug gestellt (Abzugsleistung 360 m³/h) und nach 7 Tagen und 14 Tagen erneut der Treibmittelgehalt des Minigranulats und die Schäumbarkeit zur minimalen Schaumdichte untersucht.

Die Beispiele zeigen, dass mit höheren Iso-Pentan-Anteilen das Treibmittelhaltevermögen nach Lagerung verbessert und geringere minimale Schüttdichten erreicht werden können.

**Tabelle 4a**

| Beispiele | 20 | 21 | 22 | 23 | 24 | 25 | 26 | 27 | 28 |
|---|---|---|---|---|---|---|---|---|---|
| Zusammensetzung | | | | | | | | | |
| Komp. A [Gew.-%] | 76,5 | 72,8 | 72,8 | 67,2 | 67,2 | 63,2 | 63,2 | 71,3 | 67,5 |
| Komp. 81.1 [Gew.-%] | 7,6 | 7,5 | 7,5 | 7,5 | 7,5 | 7,6 | 7,6 | 9,5 | 13,3 |
| Komp. B2.2 [Gew.-%] | 8,5 | 12,3 | 12,3 | 12,3 | 12,3 | 8,5 | 8,5 | 4,7 | 4,7 |
| Komp. C1.2 [Gew.-%] | 0,0 | 0,0 | 0,0 | 5,7 | 5,7 | 13,3 | 13,3 | 7,6 | 7,6 |
| Komp. C2.1 [Gew.-%] | 1,2 | 1,2 | 1,2 | 1,2 | 1,2 | 1,2 | 1,2 | 0,8 | 0,8 |
| Komp. D [Gew.-%] | 5,7 | 5,7 | 5,7 | 5,7 | 5,7 | 5,7 | 5,7 | 5,7 | 5,7 |
| Komp. D n- / iso-Pentan | 5/95 | 80 / 20 | 5/95 | 80/20 | 5/95 | 80/20 | 5/95 | 5/95 | 5/95 |
| Komp. E [Gew.-%] | 0,5 | 0,5 | 0,5 | 0,5 | 0,5 | 0,5 | 0,5 | 0,5 | 0,5 |

| 16 Tagen geschlossene Lagerung | | | | | | | | | |
|---|---|---|---|---|---|---|---|---|---|
| Treibmittelgehalt [Gew.-%] | 4,5 | 4,9 | 5,0 | 5,0 | 5,0 | 5,3 | 4,9 | 5,0 | 5,1 |
| minimale Schüttdichte [g/L] | 20,0 | 31,3 | 22,7 | 23,3 | 20,0 | 26,3 | 20,8 | 18,5 | 18,5 |
| Restl. Treibmittelgehalt [Gew.-%] | 2,1 | 1,7 | 2,4 | 1,2 | 2,5 | 2,2 | 2,8 | 3,2 | 3,6 |
| Vorschäumzeit [s] | 1800 | 1800 | 900 | 1800 | 1200 | 300 | 600 | 720 | 720 |

| +7 Tage offene Lagerung | | | | | | | | | |
|---|---|---|---|---|---|---|---|---|---|
| Treibmittelgehalt [Gew.-%] | 4,1 | 3,1 | 3,9 | 3,2 | 3,9 | 3,7 | 4,2 | 4,4 | 4,4 |
| minimale Schüttdichte [g/L] | 22,7 | 220,0 | 38,5 | 100,0 | 33,3 | 38,5 | 23,8 | 18,5 | 20,8 |
| Vorschäumzeit [s] | 1800 | 1800 | 1800 | 1200 | 1800 | 1200 | 900 | 1800 | 1800 |

| +14 Tage offene Lagerung | | | | | | | | | |
|---|---|---|---|---|---|---|---|---|---|
| Beispiele | 20 | 21 | 22 | 23 | 24 | 25 | 26 | 27 | 28 |
| Treibmittelgehalt [Gew.-%] | 3,9 | 2,7 | 3,5 | 2,8 | 3,5 | 3,3 | 3,9 | 4,3 | 4,3 |
| minimale Schüttdichte [g/L] | 23,8 | 220,0 | 50,0 | 270,0 | 45,5 | 50,0 | 27,8 | 20,8 | 21,7 |
| Vorschäumzeit [s] | 1800 | 1800 | 1800 | 1200 | 1800 | 1200 | 900 | 1800 | 1800 |

**Tabelle 4b**

| Beispiele | 29 | 30 | 31 | 32 | 33 | 34 | 35 |
|---|---|---|---|---|---|---|---|
| Zusammensetzung | | | | | | | |
| Komp. A [Gew.-%] | 70,9 | 70,9 | 70,9 | 67,2 | 67,5 | 67,5 | 67,2 |
| Komp. B1.1 [Gew.-%] | 7,5 | 7,5 | 7,5 | 7,5 | 7,6 | 7,6 | 7,5 |
| Komp. B2.2 [Gew.-%] | 8,5 | 8,5 | 8,5 | 4,7 | 4,7 | 4,7 | 4,7 |
| Komp. C1.2 [Gew.-%] | 5,7 | 5,7 | 5,7 | 13,2 | 13,3 | 13,3 | 13,2 |
| Komp. C2.1 [Gew.-%] | 1,2 | 1,2 | 1,2 | 0,8 | 0,8 | 0,8 | 0,8 |
| Komp. D [Gew.-%] | 5,7 | 5,7 | 5,7 | 6,1 | 5,7 | 5,7 | 6,1 |
| Komp. D n- / iso-Pentan | 80 / 20 | 40/60 | 5/95 | 80/20 | 80/20 | 40/60 | 5/95 |
| Komp. E [Gew.-%] | 0,5 | 0,5 | 0,5 | 0,5 | 0,5 | 0,5 | 0,5 |

| 16 Tagen geschlossene Lagerung | | | | | | | |
|---|---|---|---|---|---|---|---|
| Treibmittelgehalt [Gew.-%] | 5,1 | 5,2 | 5,3 | 5,7 | 5,6 | 5,7 | 5,6 |
| minimale Schüttdichte [g/L] | 22,7 | 20,0 | 20,0 | 25,0 | 25,0 | 17,9 | 17,9 |
| Restl. Treibmittelgehalt [Gew.-%] | 1,4 | 2,4 | 3,4 | 2,4 | 2,1 | 2,7 | 3,3 |
| Vorschäumzeit [s] | 420 | 600 | 720 | 150 | 150 | 180 | 180 |

| Beispiele | 29 | 30 | 31 | 32 | 33 | 34 | 35 |
|---|---|---|---|---|---|---|---|
| +7 Tage offene Lagerung | | | | | | | |
| Treibmittelgehalt [Gew.-%] | 3,5 | 3,7 | 4,5 | 4,1 | 3,8 | 3,8 | 4,5 |
| minimale Schüttdichte [g/L] | 33,8 | 25,0 | 20,2 | 27,8 | 31,3 | 21,7 | 20,0 |
| Vorschäumzeit [s] | 2700 | 1620 | 1200 | 600 | 600 | 900 | 300 |
| +14 Tage offene Lagerung | | | | | | | |
| Treibmittelgehalt [Gew.-%] | 3,0 | 3,3 | 4,2 | 3,8 | 3,4 | 3,5 | 4,2 |
| minimale Schüttdichte [g/L] | 50,0 | 42,9 | 22,1 | 42,9 | 38,5 | 26,3 | 23,7 |
| Vorschäumzeit [s] | 1800 | 1800 | 1800 | 600 | 1200 | 1200 | 360 |

### Beispiele 36 bis 55: Formteilherstellung aus Schaumstoffpartikeln P1 und P2

### Herstellung der Schaumstoffpartikel P1:

In einem Zweischneckenextruder der Firma Leitritz ZE 40 wurden die Komponenten A) bis C) bei 240 - 260°C / 140 bar aufgeschmolzen und mit Talkum als Nukleierungsmittel (Komponente E) versetzt (siehe Tabelle 1). Anschließend wurde in die Polymerschmelze das Treibmittelgemisch aus 95 Gew.-% iso-Pentan, 5 Gew.-% n-Pentan (Komponente D) gedrückt und über zwei statische Mischer homogen in die Polymerschmelze eingearbeitet. Danach wurde über einen Kühler die Temperatur auf 180°-195°C reduziert. Nach weiterer Homogenisierung über zwei weitere statische Mischer, wurde die Polymerschmelze mit 50 kg/h durch eine auf 240 - 260°C temperierte Lochplatte bei 200 - 220 bar gedrückt (0,6 mm Lochdurchmesser mit 7 Nester x 7 Löcher oder 0,4 mm Lochdurchmesser mit 7 Nester x 10 Löcher). Der Polymerstrang wurde mittels Unterwassergranulierung abgeschlagen 1,1-1,0 MPa (11-10 bar) Unterwasserdruck bei 40°C-50°C Wassertemperatur), so dass ein treibmittelbeladenes Minigranulat mit enger Teilchengrößenverteilung (d'= 1,2 mm bei 0,65 mm Lochdurchmesser) erhalten wurde.

Als Beschichtungskomponenten wurde 70 Gew.-% Gycerintristearat (GTS) und 30 Gew.-% Glycerinmonostearat (GMS) verwendet. Das Beschichtungsmittel hatte einen positiven Effekt auf die Verschweißung der vorgeschäumten Schaumstoffperlen zum Formteil.

**Tabelle 5: Zusammensetzung der expandierbaren Polymerpartikel (EPS) in Gewichtsanteilen für die Herstellung der Schaumstoffpartikel P1.1, P1.2 und P1.3**

| Beispiel [Gew.-%] | Komp. A | Komp. B1.1 | Komp. B2.2 | Komp. C2.2 | Komp. C1.2 | Komp. E | Komp. D |
|---|---|---|---|---|---|---|---|
| P1.1 | 67,2 | 7,5 | 4,7 | 0,7 | 13,2 | 0,5 | 6,1 |
| P1.2 | 67,9 | 7,5 | 4,7 | 0 | 13,2 | 0,5 | 6,1 |
| P1.3 V | 81,1 | 7,5 | 4,7 | 0 | 0 | 0,5 | 6,1 |

In einer transmissionselektronenmikroskopischen Aufnahme (TEM) kann die disperse Verteilung des Polyethylens (Phase 1 helle Bereiche) und disperse Verteilung des Styrol-Butadien-Blockcopolymer (Phase 2, dunkle Bereiche) im treibmittelhaltigen Minigranulat, die später zur Elastifizierung im Schaum beitragen, erkannt werden. Die PE-Domänen des treibmittelbeladenen Minigranulats liegen dabei in der Größenordnung von 200 bis 1000 nm, die Styrol-Butadien-Blockcopolymer-Domänen in der Größenordnung von 200 bis 1500 nm.

Das treibmittelhaltige Granulat wurde in einem EPS-Vorschäumer zu Schaumperlen geringer Dichte (17,7 kg/m³ vorgeschäumt).

### Schaumstoffpartikel P2:

Neopor® X 5300 (Graphit-haltiges expandierbares Polystyrol der BASF SE) wurde auf eine Dichte von 16,1 kg/m³ vorgeschäumt.

Schaumstoffpartikel P1 und P2 wurden im Mengenverhältnis gemäß den Tabellen 6 bis 9 gemischt und in einem EPS-Formteilautomaten bei einem Überdruck von 1,1 bar zu Formteilen verarbeitet.

An den Formteilen wurden verschiedene mechanische Messungen durchgeführt um die Elastifizierung des Schaumstoffs nachzuweisen. Bei den erfindungsgemäßen Beispielen wird im Vergleich zum reinen EPS eine deutliche Elastifizierung beobachtet, die an dem sehr hohen Rückstellungsvermögen erkennbar ist. Die Druckfestigkeit wurde bei 10 % Stauchung nach DIN-EN 826 und die Biegefestigkeit nach DIN-EN 12089 bestimmt. Die Biegearbeit wurde aus den Messwerten zur Biegefestigkeit ermittelt.

Das Beispiel 40V stellt einen Vergleichsversuch dar.

**Tabelle 6: Eigenschaften der Partikelschaumstoffe aus unterschiedlichen Anteilen an Schaumstoffpartikeln P1.1:**

| Beispiel | 36 | 37 | 38 | 39 | 40V |
|---|---|---|---|---|---|
| P1.1 | 100% | 60% | 40% | 20% | 0% |
| P2 | 0% | 40% | 60% | 80% | 100% |
| Dichte [g/l] | 17,7 | 17,3 | 16,8 | 16,6 | 16,1 |
| Biegearbeit [Nm] | 5,4 | 4,2 | 3,7 | 3,1 | 2,7 |
| Biegefestigkeit [kPa] | 250,7 | 247,9 | 243,5 | 239,3 | 228,3 |
| Spezifische Arbeit [Nm/(kg/m³)] | 0,3 | 0,2 | 0,2 | 0,2 | 0,2 |
| Spezifische Kraft [N/(kg/m³)] | 35,0 | 35,1 | 35,8 | 35,3 | 35,2 |

Die Beispiele zeigen, dass die Schaumstoffpartikel P2 über weite Bereiche mit den erfindungsgemäß verwendeten Schaumstoffpartikel P1 gemischt werden können. Auf diese Weise können die mechanischen Eigenschaften, beispielsweise die Biegearbeit, gezielt eingestellt werden.

**Tabelle 7: Biegearbeit [Nm] der Partikelschaumstoffe aus unterschiedlichen Anteilen an Schaumstoffpartikeln P1.1**

| Beispiel | 41 | 42 | 43 | 44 | 45 |
|---|---|---|---|---|---|
| Anteil P2 [Gew.-%] | 0 | 20 | 40 | 60 | 80 |
| Anteil P1.1 [Gew.-%] | 95 | 80 | 60 | 40 | 20 |
| Biegearbeit [Nm] | 5,5 | 5,0 | 4,2 | 3,7 | 3,1 |

**Tabelle 8: Biegearbeit [Nm] der Partikelschaumstoffe aus unterschiedlichen Anteilen an Schaumstoffpartikeln P1.2**

| Beispiel | 46 | 47 | 48 | 49 | 50 |
|---|---|---|---|---|---|
| Anteil P2 [Gew.-%] | 0 | 20 | 40 | 60 | 80 |
| Anteil P1.2 [Gew.-%] | 95 | 80 | 60 | 40 | 20 |
| Biegearbeit [Nm] | 4,2 | 4,0 | 3,5 | 3,3 | 3,2 |

**Tabelle 9: Biegearbeit [Nm} der Partikelschaumstoffe aus unterschiedlichen Anteilen an Schaumstoffpartikeln P1.3 V**

| Beispiel | 51 | 52 | 53 | 54 | 55 |
|---|---|---|---|---|---|
| Anteil P2 [Gew.-%] | 0 | 20 | 40 | 60 | 80 |
| Anteil P1.3V [Gew.-%] | 95 | 80 | 60 | 40 | 20 |
| Biegearbeit [Nm] | 3,1 | 2,8 | 2,9 | 3,0 | 2,7 |

## Patentansprüche

1. Expandierbare, thermoplastische Polymerpartikel, enthaltend
A) 45 bis 97,8 Gewichtsprozent eines Styrolpolymeren,
B1) 1 bis 45 Gewichtsprozent eines Polyolefins mit einem mittels DSC bei einer Aufheizrate von 10°C/Minute ermitteltem Schmelzpunkt im Bereich von 105 bis 140°C,
B2) 0 bis 25 Gewichtsprozent eines Polyolefins mit einem mittels DSC bei einer Aufheizrate von 10°C/Minute ermitteltem Schmelzpunkt unter 105°C,
C1) 0,1 bis 25 Gewichtsprozent eines Styrol-Butadien- oder Styrol-Isopren-Blockcopolymeren,
C2) 0,1 bis 10 Gewichtsprozent eines Styrol-Ethylen-Butylen-Blockcopolymeren,
D) 1 bis 15 Gewichtsprozent eines Treibmittels,
E) 0 bis 5 Gewichtsprozent eines Nukleierungsmittels
wobei die Summe aus A) bis E) 100 Gew.-% ergibt.

2. Expandierbare, thermoplastische Polymerpartikel nach Anspruch 1, **dadurch gekennzeichnet, dass** sie
A) 55 bis 78,1 Gewichtsprozent eines Styrolpolymeren,
B1) 4 bis 25 Gewichtsprozent eines Polyolefins mit einem mittels DSC bei einer Aufheizrate von 10°C/Minute ermitteltem Schmelzpunkt im Bereich von 105 bis 140°C,
B2) 1 bis 15 Gewichtsprozent eines Polyolefins mit einem mittels DSC bei einer Aufheizrate von 10°C/Minute ermitteltem Schmelzpunkt unter 105°C,
C1) 6 bis 15 Gewichtsprozent eines Styrol-Butadien- oder Styrol-Isopren-Blockcopolymeren,
C2) 1 bis 5 Gewichtsprozent eines Styrol-Ethylen-Butylen-Blockcopolymeren,
D) 3 bis 10 Gewichtsprozent eines Treibmittels,
E) 0,3 bis 3 Gewichtsprozent eines Nukleierungsmittels
enthaltend, wobei die Summe aus A) bis E) 100 Gew.-% ergibt.

3. Expandierbare, thermoplastische Polymerpartikel nach Anspruch 1 oder 2, **dadurch gekennzeichnet, dass** sie als Styrolpolymer A) Standard-Polystyrol (GPPS) enthalten.

4. Expandierbare, thermoplastische Polymerpartikel nach einem der Ansprüche 1 bis 3, **dadurch gekennzeichnet, dass** sie als Polyolefin B1) Polyethylen enthalten.

5. Expandierbare, thermoplastische Polymerpartikel nach einem der Ansprüche 1 bis 4, **dadurch gekennzeichnet, dass** sie als Polyolefin B2) ein Copolymer aus Ethylen und Octen enthalten.

6. Expandierbare, thermoplastische Polymerpartikel nach einem der Ansprüche 1 bis 5, **dadurch gekennzeichnet, dass** als Komponente C1 ein Blockcopolymer mit einem mittels Gelpermeationschromatographie ermittelten gewichtsmittleren Molekulargewicht M_{w} von mindestens 100.000 g/mol, enthaltend
a) mindestens einen Block S aus 95 bis 100 Gew.-% vinylaromatischen Monomeren und 0 bis 5 Gew.-% Dienen und
b) mindestens einen Copolymerblock (S/B)_{A} aus 63 bis 80 Gew.-% vinylaromatischen Monomeren und 20 bis 37 Gew.-% Dienen mit einer Glasübergangstemperatur Tg_{A} im Bereich von 5 bis 30°C, wobei
der Gewichtsanteil der Summe aller Blöcke S im Bereich von 50 bis 70 Gew.-%, bezogen auf das Blockcopolymer liegt, eingesetzt wird.

7. Expandierbare, thermoplastische Polymerpartikel nach einem der Ansprüche 1 bis 6, **dadurch gekennzeichnet, dass** das Blockcopolymer C1 eine lineare Struktur mit der Blockfolge S₁-(S/B)_{A}-S₂-(S/B)_{A}-S₃ aufweist, wobei S₁, S₂ und S₃ jeweils für einen Block S stehen

8. Expandierbare, thermoplastische Polymerpartikel nach einem der Ansprüche 1 bis 7, **dadurch gekennzeichnet, dass** das die Summe der Anteile der Komponenten C1 und C2 im Bereich von 6,8 bis 18 Gewichtsprozent liegt.

9. Expandierbare, thermoplastische Polymerpartikel nach einem der Ansprüche 1 bis 8, **dadurch gekennzeichnet, dass** das Gewichtsverhältnis der Summe aus den Komponenten B1 und B2 zu C2 im Bereich von 5 bis 70 beträgt.

10. Expandierbare, thermoplastische Polymerpartikel nach Anspruch 4, **dadurch gekennzeichnet, dass** das Gewichtsverhältnis Komponenten C1 zu C2 im Bereich von 2 bis 5 liegt.

11. Expandierbare, thermoplastische Polymerpartikel nach einem der Ansprüche 1 bis 10, **dadurch gekennzeichnet, dass** sie als Treibmittel eine Mischung aus C₃ bis C₈-Kohlenwasserstoffen mit einem Anteil von 25 bis 100 Gewichtsprozent, bezogen auf das Treibmittel, iso-Pentan oder Cyclopentan enthalten.

12. Expandierbare, thermoplastische Polymerpartikel nach einem der Ansprüche 1 bis 11, **dadurch gekennzeichnet, dass** sie mindestens eine disperse Phase mit einem mittleren Durchmesser im Bereich von 1 bis 1500 nm aufweisen.

13. Expandierbare, thermoplastische Polymerpartikel Anspruch 12, **dadurch gekennzeichnet, dass** sie aus einer mehrphasigen treibmittelhaltigen Polymermischung mit mindestens einer kontinuierlichen Phase und mindestens zwei in der kontinuierlichen Phase verteilten dispersen Phasen P1 und P2 bestehen, wobei
a) die kontinuierliche Phase im Wesentlichen aus der Komponenten A,
b) die erste disperse Phase P1 im Wesentlichen aus den Komponenten B1 und B2 und
c) die zweite disperse Phase P2 im Wesentlichen aus der Komponente C1 bestehen.

14. Expandierbare, thermoplastische Polymerpartikel nach einem der Ansprüche 1 bis 13, **dadurch gekennzeichnet, dass** sie eine Beschichtung, enthaltend ein Glycerinstearat, aufweisen.

15. Verfahren zur Herstellung von expandierbaren, thermoplastischen Polymerpartikeln nach einem der Ansprüche 1 bis 13, **dadurch gekennzeichnet, dass** man
a) eine Polymerschmelze mit einer kontinuierlichen und mindestens einer dispersen Phase durch Mischen der Komponenten A bis C und gegebenenfalls E herstellt,
b) diese Polymerschmelze mit einem Treibmittel D imprägniert,
c) und zu expandierbaren thermoplastischen Polymerpartikel durch Unterwassergranulierung bei einem Druck von 0,15 bis 1 MPa (1,5 bis 10 bar) granuliert.

16. Verfahren zur Herstellung von expandierbaren, thermoplastischen Polymerpartikeln nach einem der Ansprüche 1 bis 13, **dadurch gekennzeichnete**n, dass man
a) eine Polymerschmelze mit einer kontinuierlichen und einer dispersen Phase durch Mischen der Komponenten A bis C und gegebenenfalls E hergestellt,
b) diese Polymerschmelze granuliert und in wässriger Phase unter Druck und erhöhter Temperatur mit einem Treibmittel D) zu expandierbaren thermoplastischen Polymerpartikel nachimprägniert.

17. Verfahren nach Anspruch 15 oder 16, **dadurch gekennzeichnet, dass** in Stufe b) 1 bis 10 Gewichtsprozent, bezogen auf die Polymermischung, eines C₃ bis C₈-Kohlenwasserstoffes als Treibmittel eingesetzt wird.

18. Verfahren zur Herstellung von Partikelschaumstoffen durch Versintern einer Mischung enthaltend Schaumstoffpartikel P1 und P2 aus unterschiedlichen thermoplastischen Polymeren oder Polymermischungen, **dadurch gekennzeichnet, dass** die Schaumstoffpartikel P1 durch Vorschäumen von expandierbaren, thermoplastischen Polymerpartikeln gemäß einem der Ansprüche 1 bis 14 erhalten werden.

19. Verfahren nach Anspruch 18, **dadurch gekennzeichnet, dass** als Schaumstoffpartikel P2 expandiertes Polypropylen (EPP) oder vorgeschäumtes, expandierbares Polystyrol (EPS) eingesetzt werden.

20. Verfahren nach Anspruch 18 oder 19, **dadurch gekennzeichnet, dass** zur Herstellung der Partikelschaumstoffe 10 bis 99 Gew.-% Schaumstoffpartikel P1 und 1 bis 90 Gew.-% Schaumstoffpartikel P2 eingesetzt werden.

## Claims

1. An expandable, thermoplastic polymer bead material, comprising
A) from 45 to 97.8 percent by weight of a styrene polymer,
B1) from 1 to 45 percent by weight of a polyolefin whose melting point determined by means of DSC at a heating rate of 10°C/minute is in the range from 105 to 140°C,
B2) from 0 to 25 percent by weight of a polyolefin whose melting point determined by means of DSC at a heating rate of 10°C/minute is below 105°C,
C1) from 0.1 to 25 percent by weight of a styrenebutadiene or styrene-isoprene block copolymer,
C2) from 0.1 to 10 percent by weight of a styrene-ethylene-butylene block copolymer,
D) from 1 to 15 percent by weight of a blowing agent,
E) from 0 to 5 percent by weight of a nucleating agent
where the entirety of A) to E) gives 100% by weight.

2. The expandable, thermoplastic polymer bead material according to claim 1, which comprises
A) from 55 to 78.1 percent by weight of a styrene polymer,
B1) from 4 to 25 percent by weight of a polyolefin whose melting point determined by means of DSC at a heating rate of 10°C/minute is in the range from 105 to 140°C,
B2) from 1 to 15 percent by weight of a polyolefin whose melting point determined by means of DSC at a heating rate of 10°C/minute is below 105°C,
C1) from 6 to 15 percent by weight of a styrenebutadiene or styrene-isoprene block copolymer,
C2) from 1 to 5 percent by weight of a styrene-ethylene-butylene block copolymer,
D) from 3 to 10 percent by weight of a blowing agent,
E) from 0.3 to 3 percent by weight of a nucleating agent
where the entirety of A) to E) gives 100% by weight.

3. The expandable, thermoplastic polymer bead material according to claim 1 or 2, which comprises standard polystyrene (GPPS) as styrene polymer A).

4. The expandable, thermoplastic polymer bead material according to any one of claims 1 to 3, which comprises polyethylene as polyolefin B1).

5. The expandable, thermoplastic polymer bead material according to any of claims 1 to 4, which comprises a copolymer composed of ethylene and octene as polyolefin B2).

6. The expandable, thermoplastic polymer bead material according to any of claims 1 to 5, which uses, as component C1, a block copolymer whose weight-average molar mass M_{w} determined by means of gel permeation chromatography is at least 100 000 g/mol, comprising
a) at least one block S composed of from 95 to 100% by weight of vinylaromatic monomers and of from 0 to 5% by weight of dienes, and
b) at least one copolymer block (S/B)_{A} composed of from 63 to 80% by weight of vinylaromatic monomers and of from 20 to 37% by weight of dienes, with a glass transition temperature Tg_{A} in the range from 5 to 30°C, where
the proportion by weight of the entirety of all of the blocks S is in the range from 50 to 70% by weight, based on the block copolymer.

7. The expandable, thermoplastic polymer bead material according to any of claims 1 to 6, wherein the block copolymer C1 has a linear structure having the block sequence S₁-(S/B)_{A}-S₂-(S/B)_{A}-S₃, where each of S₁, S₂ and S₃ is a block S.

8. The expandable, thermoplastic polymer bead material according to any of claims 1 to 7, wherein the total of the proportions of components C1 and C2 is in the range from 6.8 to 18 percent by weight.

9. The expandable, thermoplastic polymer bead material according to any of claims 1 to 8, wherein the ratio by weight of the entirety composed of components B1 and B2 to C2 is in the range from 5 to 70.

10. The expandable, thermoplastic polymer bead material according to claim 4, wherein the ratio by weight of components C1 to C2 is in the range from 2 to 5.

11. The expandable, thermoplastic polymer bead material according to any of claims 1 to 10, which comprises, as blowing agent, a mixture composed of C₃-C₈ hydrocarbons with a proportion of from 25 to 100 percent by weight, based on the blowing agent, of isopentane or cyclopentane.

12. The expandable, thermoplastic polymer bead material according to any of claims 1 to 11, which comprises at least one disperse phase with average diameter in the range from 1 to 1500 nm.

13. The expandable, thermoplastic polymer bead material according to claim 12, which is composed of a multiphase polymer mixture comprising blowing agent and having at least one continuous phase and at least two disperse phases P1 and P2 distributed within the continuous phase, where
a) the continuous phase consists essentially of component A,
b) the first disperse phase P1 consists essentially of components B1 and B2, and
c) the second disperse phase P2 consists essentially of component C1.

14. The expandable, thermoplastic polymer bead material according to any of claims 1 to 13, which comprises a coating, comprising a glycerol stearate.

15. A process for the production of expandable, thermoplastic polymer bead materials according to any of claims 1 to 13, which comprises
a) producing a polymer melt with a continuous and at least one disperse phase via mixing of components A to C and optionally E,
b) impregnating this polymer melt with a blowing agent D,
c) and pelletizing to give expandable thermoplastic polymer bead material, via underwater pelletization at a pressure of from 0.15 to 1 MPa (1.5 to 10 bar).

16. A process for the production of expandable, thermoplastic polymer bead materials according to any of claims 1 to 13, which comprises
a) producing a polymer melt with a continuous and a disperse phase via mixing of components A to C and optionally E,
b) pelletizing this polymer melt, and then impregnating it in an aqueous phase under pressure and at an elevated temperature with a blowing agent D) to give expandable thermoplastic polymer bead material.

17. The process according to claim 15 or 16 wherein, in stage b), from 1 to 10 percent by weight, based on the polymer mixture, of a C₃-C₈ hydrocarbon are used as blowing agent.

18. A process for the production of molded foams via sintering of a mixture comprising foam beads P1 and P2 composed of different thermoplastic polymers or polymer mixtures, which comprises obtaining the foam beads P1 via prefoaming of expandable, thermoplastic polymer bead materials according to any of claims 1 to 14.

19. The process according to claim 18, wherein expanded polypropylene (EPP) or prefoamed, expandable polystyrene (EPS) is used as foam beads P2.

20. The process according to claim 18 or 19, wherein from 10 to 99% by weight of foam beads P1 and from 1 to 90% by weight of foam beads P2 are used for the production of the molded foams.

## Revendications

1. Particules polymères expansibles, thermoplastiques, contenant
A) 45 à 97,8% en poids d'un polymère du styrène,
B1) 1 à 45% en poids d'une polyoléfine présentant un point de fusion déterminé au moyen de DSC (calorimétrie différentielle à balayage) à une vitesse de chauffage de 10°C/minute, dans la plage de 105 à 140°C,
B2) 0 à 25% en poids d'une polyoléfine présentant un point de fusion déterminé au moyen de DSC (calorimétrie différentielle à balayage) à une vitesse de chauffage de 10°C/minute, inférieur à 105°C,
C1) 0,1 à 25% en poids d'un copolymère à blocs de styrène-butadiène ou de styrène-isoprène,
C2) 0,1 à 10% en poids d'un copolymère à blocs de styrène-éthylène-butylène,
D) 1 à 15% en poids d'un agent gonflant,
E) 0 à 5% en poids d'un agent de nucléation,
la somme de A) à E) valant 100% en poids.

2. Particules polymères expansibles, thermoplastiques, selon la revendication 1, **caractérisées en ce qu'**elles contiennent
A) 55 à 78,1% en poids d'un polymère du styrène,
B1) 4 à 25% en poids d'une polyoléfine présentant un point de fusion déterminé au moyen de DSC (calorimétrie différentielle à balayage) à une vitesse de chauffage de 10°C/minute, dans la plage de 105 à 140°C,
B2) 1 à 15% en poids d'une polyoléfine présentant un point de fusion déterminé au moyen de DSC (calorimétrie différentielle à balayage) à une vitesse de chauffage de 10°C/minute, inférieur à 105°C,
C1) 6 à 15% en poids d'un copolymère à blocs de styrène-butadiène ou de styrène-isoprène,
C2) 1 à 5% en poids d'un copolymère à blocs de styrène-éthylène-butylène,
D) 3 à 10% en poids d'un agent gonflant,
E) 0,3 à 3% en poids d'un agent de nucléation,
la somme de A) à E) valant 100% en poids.

3. Particules polymères expansibles, thermoplastiques, selon la revendication 1 ou 2, **caractérisées en ce qu'**elles contiennent, comme polymère de styrène A), du polystyrène standard (GPPS).

4. Particules polymères expansibles, thermoplastiques, selon l'une quelconque des revendications 1, à 3, **caractérisées en ce qu'**elles contiennent, comme polyoléfine B1), du polyéthylène.

5. Particules polymères expansibles, thermoplastiques, selon l'une quelconque des revendications 1 à 4, **caractérisées en ce qu'**elles contiennent, comme polyoléfine B2), un copolymère d'éthylène et d'octène.

6. Particules polymères expansibles, thermoplastiques, selon l'une quelconque des revendications 1 à 5, **caractérisées en ce qu'**on utilise, comme composant C1, un copolymère à blocs présentant un poids moléculaire pondéral moyen M_{w} déterminé par chromatographie par perméation de gel d'au moins 100 000 g/mole, contenant
a) au moins un bloc S constitué par 95 à 100% en poids de monomères aromatiques de vinyle et 0 à 5% en poids de diènes et
b) au moins un bloc copolymère (S/B)_{A} constitué par 63 à 80% en poids de monomères aromatiques de vinyle et 20 à 37% en poids de diènes présentant une température de transition vitreuse Tg_{A} dans la plage de 5 à 30°C,
la proportion pondérale de la somme de tous les blocs S se situant dans la plage de 50 à 70% en poids, par rapport au copolymère à blocs.

7. Particules polymères expansibles, thermoplastiques, selon l'une quelconque des revendications 1 à 6, **caractérisées en ce que** le copolymère à blocs C1 présente une structure linéaire d'une succession de blocs S₁-(S/B)_{A}-S₂-(S/B)_{A}-S₃, S₁, S₂ et S₃ représentant à chaque fois un bloc S.

8. Particules polymères expansibles, thermoplastiques, selon l'une quelconque des revendications 1 à 7, **caractérisées en ce que** la somme des proportions des composants C1 et C2 se situe dans la plage de 6,8 à 18% en poids.

9. Particules polymères expansibles, thermoplastiques, selon l'une quelconque des revendications 1 à 8, **caractérisées en ce que** le rapport pondéral de la somme des composants B1 et B2 à C2 se situe dans la plage de 5 à 70.

10. Particules polymères expansibles, thermoplastiques, selon la revendication 4, **caractérisées en ce que** le rapport pondéral des composants C1 à C2 se situe dans la plage de 2 à 5.

11. Particules polymères expansibles, thermoplastiques, selon l'une quelconque des revendications 1 à 10, **caractérisées en ce qu'**elles contiennent, comme agent gonflant, un mélange d'hydrocarbures en C₃ à C₈ présentant une proportion de 25 à 100% en poids, par rapport à l'agent gonflant, d'isopentane ou de cyclopentane.

12. Particules polymères expansibles, thermoplastiques, selon l'une quelconque des revendications 1 à 11, **caractérisées en ce qu'**elles présentent au moins une phase dispersée présentant un diamètre moyen dans la plage de 1 à 1500 nm.

13. Particules polymères expansibles, thermoplastiques, selon la revendication 12, **caractérisées en ce qu'**elles sont constituées d'un mélange de polymères à plusieurs phases, contenant un agent gonflant, comportant au moins une phase continue et au moins deux phases dispersées P1 et P2, réparties dans la phase continue,
a) la phase continue étant essentiellement constituée du composant A,
b) la première phase dispersée P1 étant essentiellement constituée des composants B1 et B2 et
c) la deuxième phase dispersée P2 étant essentiellement constituée du composant C1.

14. Particules polymères expansibles, thermoplastiques, selon l'une quelconque des revendications 1 à 13, **caractérisées en ce qu'**elles présentent un revêtement contenant un stéarate de glycérol.

15. Procédé pour la production de particules polymères expansibles, thermoplastiques, selon l'une quelconque des revendications 1 à 13, **caractérisé en ce qu'**on
a) prépare une masse fondue de polymère, présentant une phase continue et au moins une phase dispersée par mélange des composants A à C et le cas échéant E,
b) imprègne cette masse fondue de polymère d'un agent gonflant D,
c) et granule en particules polymères expansibles, thermoplastiques, par granulation sous eau à une pression de 0,15 à 1 MPa (1,5 à 10 bars).

16. Procédé pour la production de particules polymères expansibles, thermoplastiques, selon l'une quelconque des revendications 1 à 13, **caractérisé en ce qu'**on
a) prépare une masse fondue de polymère, présentant une phase continue et une phase dispersée par mélange des composants A à C et le cas échéant E,
b) granule cette masse fondue de polymère et post-imprègne en phase aqueuse sous pression et à température augmentée par un agent gonflant D) en particules polymères expansibles, thermoplastiques.

17. Procédé selon la revendication 15 ou 16, **caractérisé en ce qu'**on utilise, dans l'étape b), 1 à 10% en poids, par rapport au mélange de polymères, d'un hydrocarbure en C₃ à C₈ comme agent gonflant.

18. Procédé pour la fabrication de mousses de particules par frittage d'un mélange contenant des particules de mousse P1 et P2 constituées de différents polymères thermoplastiques ou de différents mélanges de polymères thermoplastiques, **caractérisé en ce que** les particules de mousse P1 sont obtenues par prémoussage de particules polymères expansibles, thermoplastiques, selon l'une quelconque des revendications 1 à 14.

19. Procédé selon la revendication 18, **caractérisé en ce qu'**on utilise comme particules de mousse P2 du polypropylène expansé (EPP) ou du polystyrène expansible, prémoussé (EPS).

20. Procédé selon la revendication 18 ou 19, **caractérisé en ce qu'**on utilise, pour la fabrication des mousses de particules, 10 à 99% en poids de particules de mousse P1 et 1 à 90% en poids de particules de mousse P2.
